(19) Europäisches Patentamt
European Patent Office
Office européen des brevets

(11) **EP 0 983 190 B1**

(12) **EUROPÄISCHE PATENTSCHRIFT**

(45) Veröffentlichungstag und Bekanntmachung des Hinweises auf die Patenterteilung:
**27.06.2001 Patentblatt 2001/26**

(21) Anmeldenummer: **98913504.1**

(22) Anmeldetag: **23.04.1998**

(51) Int Cl.$^7$: **B64D 10/00**

(86) Internationale Anmeldenummer:
**PCT/CH98/00160**

(87) Internationale Veröffentlichungsnummer:
**WO 99/54200 (28.10.1999 Gazette 1999/43)**

(54) **BESCHLEUNIGUNGS-SCHUTZANZUG**

ACCELERATION PROTECTIVE SUIT

TENUE VESTIMENTAIRE DE PROTECTION CONTRE LES EFFETS DE L'ACCELERATION

(84) Benannte Vertragsstaaten:
**AT BE CH DE DK ES FI FR GB GR IT LI NL PT SE**

(30) Priorität: **20.04.1998 CH 90098**

(43) Veröffentlichungstag der Anmeldung:
**08.03.2000 Patentblatt 2000/10**

(73) Patentinhaber: **LSS Life Support Systems AG**
**8702 Zöllikon (CH)**

(72) Erfinder: **REINHARD, Andreas**
**CH-8702 Zollikon (CH)**

(74) Vertreter: **Salgo, Reinhold Caspar, Dr.**
**Rütistrasse 103**
**8636 Wald (CH)**

(56) Entgegenhaltungen:
**WO-A-91/03278        GB-A- 959 350**
**US-A- 2 228 115        US-A- 3 523 301**

**Beschreibung**

Die vorliegende Erfindung betrifft einen Anzug zum Schutz vor Beschleunigungseffekten, wie sie in Hochleistungsflugzeugen beim Fliegen von Kurven auftreten, nach dem Oberbegriffe des Patentanspruches 1.

Solche Schutzanzüge sind mehrere bekannt geworden. Die dieser Erfindung am nächsten liegenden arbeiten mit dem Auftriebsprinzip: Der Körper des Piloten - oder im Falle von mehrsitzigen Flugzeugen natürlich auch des anderen fliegenden Personals - wird umgeben von einer flüssigkeitsführenden Doppelschicht. Die auf die körpereigenen Flüssigkeiten, vorab das Blut, wirkenden Beschleunigungskräfte wirken in gleichem Masse auch auf die im Schutzanzug vorhandene Flüssigkeit. Damit werden auf die Körperfläche Druckkräfte aufgebaut, die denen entsprechen, die von der Körperflüssigkeit auf die Haut wirken. Aus EP 0 376 027 B1 D1 ist ein solcher Anzug bekannt, der das reine Auftriebsprinzip umsetzt. Diese Umsetzung verlangt ein verhältnismässig grosses Flüssigkeitsvolumen, das aussen von einem wenig dehnbaren Anzug zusammengehalten wird. Zwar wird nun der Körper des Piloten von den Druckkräften auf Blutgefässe, innere Organe und Haut entlastet, anderseits wird sein Rumpf - Skelett und statische Muskulatur - durch das durch den Beschleunigungsfaktor multiplizierte Gewicht der mitgeführten Wassermasse in erheblichem Masse zusätzlich belastet, was den Einsatz eines die Wirbelsäule entlastenden Stützkorsetts bedingt. Ferner hat die Verwendung des Schutzanzuges nach D1 zur Folge, dass der Pilot das Flugzeug ohne fremde Hilfe weder besteigen noch verlassen kann. Die Wasser- oder allgemeiner: Flüssigkeitsfüllung kann erst im Flugzeug stattfinden. Ein Notausstieg mittels Schleudersitz ist kaum denkbar. Das Anlegen dieses genannten Schutzanzuges braucht zudem intensiv fremde Hilfe.

Aus US 5,153, 938 (D2) ist ein weiterer Schutzanzug bekannt, der im wesentlichen auf dem Auftriebsprinzip aufbaut. Ein innerer Anzug, der jedoch grosse Teile des Körpers unbedeckt lässt, besteht aus flüssigkeitsgefüllten flachen Blasen. Ein äusserer, darüber zu tragender Anzug, ist im wesentlichen undehnbar und hält das ganze Ensemble zusammen. Der durch die Blasen aufgebaute Druck wird durch den äusseren Anzug auf die vom inneren Anzug unbedeckten Körperteile übertragen.

Obwohl hier durch den Verzicht auf die Bedeckung des ganzen Körpers durch den inneren Anzug erheblich Flüssigkeit - und damit Masse und Gewicht - eingespart werden kann, ist der in D2 beanspruchte Schutzanzug immer noch schwer. Um das Gewicht weiter zu reduzieren und die Bewegungsfreiheit zu verbessern, wird in D2 auf die Druckkompensation der Arme völlig verzichtet. Sie wird ersetzt durch elastische Aermel; deren Kompensationswirkung ist nur insoweit beschleunigungsabhängig, als das Volumen der Arme durch die zusätzliche Beschleunigungskräfte auf das Blut zunimmt, und dadurch das elastische Material der Aermel zusätzlich gespannt wird.

Aus CH 687 573 (D3) ist ein weiterer Schutzanzug nach dem reinen Auftriebsprinzip bekannt, der jedoch einteilig aufgebaut ist, insofern die zugfeste Aussenhaut den äusseren Anzug bildet. Auch hier besteht ein Nachteil des Schutzanzuges in seinem hohen Gewicht.

Ein weitere Schutzanzug ist in WO 91 03278 (D4) offenbart. Dieser weist eine dem Körper des Trägers zugewandte innere, flüssigkeitsdichte, flexible und elastische Schicht auf, welche sich dem Körper des Trägers anpassen kann, und eine äussere, undehnbare, ebenfalls flüssigkeitsdichte Schicht. Innere und äussere Schicht können entlang von längs des Körpers verlaufenden Linien verbunden sein, wodurch eine Vielzahl von längs verlaufenden Kanälen entsteht. Um den Flüssigkeitsaustausch zwischen den einzelnen Längs-Kanälen zu ermöglichen, können diese Verbindungslinien unterbrochen sein, wodurch Verbindungskanäle zwischen den Längs-Kanälen entstehen. Der Schutzanzug nach D4 ist einteilig aufgebaut; Integration von Handschuhen und Schuhen in den Anzug ist vorgesehen.

Durch die Ausführung der inneren Schicht aus elastischem Material liegen zwar die flüssigkeitsgefüllten Kanäle mit ihrer inneren Schicht dicht am Körper an und bewirken auf dessen Oberfläche den angestrebten Gegendruck; hingegen werden auch die die innere und äussere Schicht verbindenden Elemente gedehnt. Dies kann namentlich an Körperstellen mit grossem Krümmungsradius bewirken, dass die äussere undehnbare Schicht sich auswölbt oder/und die innere Schicht nicht mehr dicht am Körper anliegt. Ferner hat dies zur Folge, dass unter dem Einfluss einer zusätzlichen Beschleunigung in z-Richtung verhältnismässig viel Flüssigkeit nachströmen kann und muss, wozu auch die äusseren Reservoirs nötig sind.

Die Aufgabe, die durch die vorliegende Erfindung gelöst werden soll, besteht in der Schaffung eines Anzuges zum Schutz vor den Auswirkungen der Beschleunigungskräfte, die beim Kurvenfliegen in Hochleistungsflugzeugen auftreten, vorab in der momentanen und lokalen Z-Achse, ferner soll der zu schaffende Schutzanzug leichter sein, als die bisher bekannten, soll ermöglichen, dass er vom Träger ohne Hilfe an- und ausgezogen werden kann und ihn befähigen, das Flugzeug ohne Hilfe zu besteigen und zu verlassen und dem Träger ausserhalb des Flugzeuges allgemein eine normale Beweglichkeit erlauben.

Die Lösung der gestellten Aufgabe ist wiedergegeben im Patentanspruch 1 hinsichtlich ihrer wesentlichen Merkmale, in den weiteren Patentansprüchen hinsichtlich weiterer vorteilhafter Ausbildungen.

Der Erfindungsgedanke wird anhand der beigefügten Zeichnung näher erläutert es zeigen

Fig. 1     einen Querschnitt durch einen Schichtaufbau des Schutzanzuges,

Fig. 2     a eine Draufsicht
      b einen ersten Schnitt
      c einen zweiten Schnitt
      d einen dritten Schnitt durch eine erste Anordnung von Verbindungsstellen,

Fig. 3     einen Querschnitt durch eine zweite Anordnung von Verbindungsstellen,

Fig. 4     a eine Draufsicht
      b eine Seitenansicht einer dritten Anordnung von Verbindungsstellen,

Fig. 5     eine vierte Anordnung von Verbindungsstellen,

Fig. 6     eine fünfte Anordnung von Verbindungsstellen,

Fig. 7     eine Frontansicht auf ein erstes Ausführungsbeispiel des Schutzanzuges in zwei Varianten,

Fig. 8     ein Detail aus der Rückansicht des ersten Ausführungsbeispiels,

Fig. 9     einen Querschnitt durch ein erstes Ausführungsbeispiel einer Schliessvorrichtung,

Fig. 10     einen Querschnitt durch eine erste Variante zu Fig. 9,

Fig. 11     einen Querschnitt durch eine zweite Variante zu Fig. 9,

Fig. 12     eine Frontansicht eines zweiten Ausführungsbeispieles des Schutzanzuges in zwei Varianten,

Fig. 13     a einen Längsschnitt,
      b eine Draufsicht auf eine Ausführungsvariante,

Fig. 14     einen Querschnitt durch ein zweites Ausführungsbeispiel einer Schliessvorrichtung,

Fig. 15     einen Querschnitt durch ein drittes Ausführungsbeispiel einer Schliessvorrichtung,

Fig. 16     die Rückansicht von Fig. 12,

Fig. 17     eine schematische Draufsicht auf einen erfindungsgemässen Zusatz,

Fig. 18     die schematische Darstellung des Druckatmungssystems,

Fig. 19     eine teilweise aufgebrochene Seitenansicht eines Details,

Fig. 20     eine schematische Darstellung einer Heiz- und Kühlvorrichtung des Schutzanzuges.

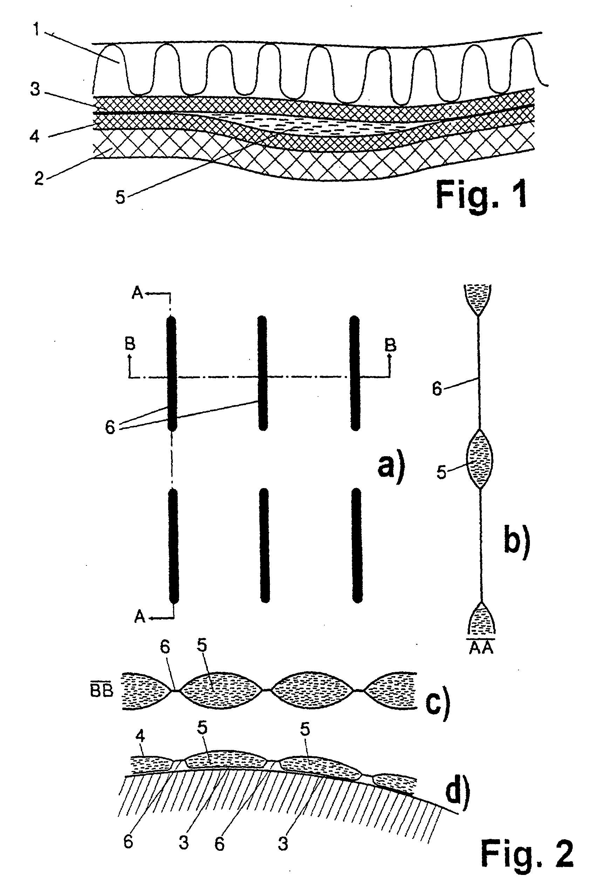

Der erfindungsgemässe Schutzanzug besteht grundsätzlich drei Kleidungsstücken. Das innerste besteht, wie in Fig. 1 schematisch dargestellt, aus einem textilen Futter 1. Ueber diesem wird der eigentliche Schutzanzug getragen. Dieser ist aufgebaut aus einer inneren Schicht 3 und einer äusseren Schicht 4. Die Schicht 3 besteht aus einem armierten flüssigkeitsdichten Kunststoff, wobei die Armierung aus einem dehnungsarmen Fasermaterial wie z.B. Aramidfasern besteht. Mit der Schicht 3 stellenweise verbunden ist die Schicht 4 aus dem gleichen Material, wie Schicht 3. Die Verbindung der Schichten 3 und 4 geschieht beispielsweise durch Schweissen, oder Nähen mit anschliessendem Abdichten der Nähte. Auf das durch die Verbindungen der Schichten 3, 4 entstehende Muster wird - da erfindungswesentlich - unten gesondert eingegangen. Zwischen den Schichten 3, 4 befindet sich in den durch deren Verbindung entstehenden Hohlräumen 5 eine Flüssigkeit, beispielsweise Wasser, allenfalls mit Zusätzen, die die Fliessfähigkeit und/oder die Dichte beeinflussen. Auf der Aussenseite der Schicht 4, mit dieser allenfalls vollflächig oder stellenweise verbunden, befindet sich ein strapazierfähiger textiler Ueberzug 2, an dem sämtliche für einen Pilotenanzug notwendigen und nützlichen Dinge und Einrichtungen befestigt sind.

Während das Vorhandensein und die Formgebung von Futter 1 und Ueberzug 2 an sich bekannt ist, ist deren Verbindung mit dem Ensemble aus Schichten 3, 4 zu einem einzigen Kleidungsstück Teil des Erfindungsgedankens. Ohne den Kern des Erfindungsgedankens zu verlassen, können allerdings Futter 1 und Ueberzug 2 auch als gesonderte Kleidungsstücke ausgeführt sein. Der aktive Teil des erfindungsgemässen Schutzanzuges besteht aus den teilweise verbundenen Schichten 3, 4.

Fig. 2 a, b, c, d, zeigt in Detailansichten das Anbringen von Verbindungsstellen 6 der Schichten 3, 4. Wie bereits erläutert, können diese Verbindungsstellen durch Schweissen, Kleben oder Nähen hergestellt werden. In Fig. 2a ist schematisch aus einem Teil des Schutzanzuges ein Feld von beispielsweise sechs Verbindungsstellen 6 dargestellt. Jede einzelne Verbindungsstelle hat die Form eines langen schlanken Streifens. Ein Schnitt AA gemäss Fig. 2b zeigt, dass der Abstand zwischen den Enden der streifenförmigen Verbindungsstellen 6 verkürzt wird, sobald die im Hohlraum 5 zwischen den Schichten 3, 4 befindliche Flüssigkeit zuströmt und unter Druck gesetzt wird. Dasselbe gilt für den seitlichen Abstand der Verbindungsstellen 6, wie im Schnitt BB gemäss Fig. 2c gezeigt.

Wird nun ein aus den Schichten 3, 4 bestehendes Gebilde - das Futter 4 und der Ueberzug 2 sind aus Gründen der Uebersichtlichkeit weggelassen - um einen Körperteil, beispielsweise einen Oberschenkel herumgelegt, so ergibt sich, was in Fig. 2d schematisch dargestellt ist:

Die äussere Schicht 4 wird gespannt auf eine Zugspannung σ, die innere Schicht legt sich - im wesentlichen spannungslos - an die Körperoberfläche an; im Inneren der Hohlräume 5 herrscht der Druck p. Dieser baut die Zugspannung σ auf, die über die Verbindungsstellen 6 übertragen wird, so dass ein bestimmter Druck p einer bestimmten Zugspannung entspricht. Werden nun zwei - im Schnitt dargestellte - Hohlräume 5 so angeordnet, dass zwischen Ihnen eine Trennzone 7 liegt, die keine Hohlräume 5 enthält, so wird die Zugspannung σ im wesentlichen ohne Abbau von Hohlraum 5 zu Hohlraum 5 weitergegeben. Der Abbau der Zugspannung, der normalerweise mit einem Umschlingungswinkel α einhergeht:

$$\sigma(\alpha) = \sigma_0 \cdot e^{-\alpha \cdot f_H}$$

wo

$\sigma_0$ = Einleitungsspannung
$f_H$ = Haftreibungsbeiwert,

gilt nur für starre umschlungene Körper. Menschliches Körpergewebe ist jedoch weitgehend nachgiebig und verformbar.

Die Trennzone 7 kann aus den aufeinanderliegenden Schichten 3, 4 bestehen, oder aber aus einem flexiblen jedoch dehnungsarmen textilen Material, beispielsweise nur der Schicht 3 oder der Schicht 4. Die Verbindungsstellen 6 sind den Hohlräumen unmittelbar benachbart. Sie können, wie in Fig. 1, 2 gezeigt, die Schichten 3, 4 verbinden, oder zusätzlich die Verbindung zu dem textilen Material sicherstellen, aus welchem die Trennzone 7 gefertigt ist.

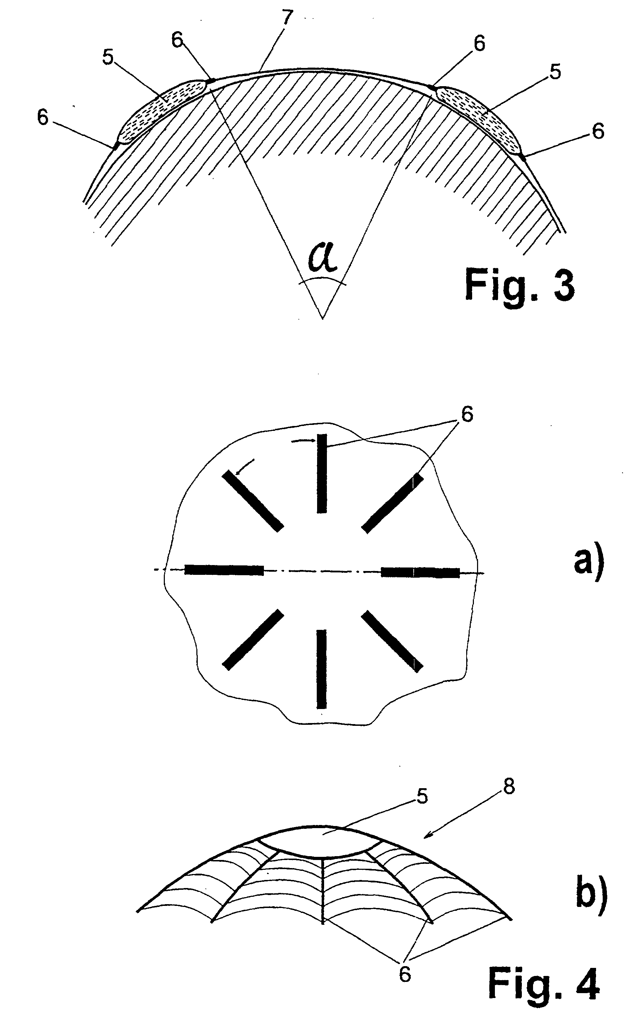

Fig. 4a, b zeigen die druckbewirkte Verformung einer Anordnung von beispielsweise acht radial verlaufenden linear angelegten Verbindungsstellen 6. In Fig. 4a ist eine Draufsicht gezeigt, in Fig. 4b eine Seitenansicht, teilweise im Schnitt. Da sich die Zwischenräume zwischen den Verbindungsstellen 6 bei gleichem Druck annähernd proportional zum Abstand zwischen homologen Punkten zweier Verbindungsstellen 6 verkürzen, hebt sich die Anordnung kegelförmig aus der Ebene heraus und bildet einen Korb 8.

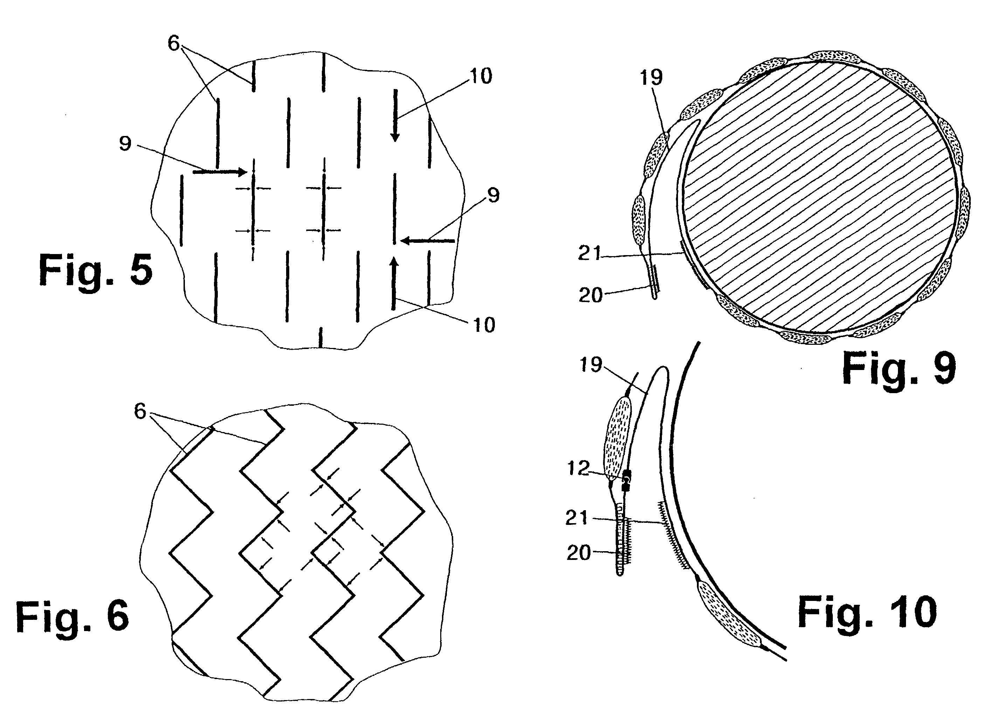

Eine solche Anordnung ist vorzugsweise an Körperstellen zu wählen, wo Rundungen zu umschliessen sind, wie Ellbogen, Knie, Gesäss; eine Anordnung gemäss Fig. 2 wird vorzugsweise bei mehr zylindrischen Körperteilen, wie Beinen oder Armen gewählt. Modifikationen zur Anordnung von Fig. 2 sind in Fig. 5 und 6 dargestellt.

In Fig. 5 sind die linear ausgebildeten Verbindungsstellen in gegeneinander versetzten Reihen angeordnet. Durch Druckanwendung auf die Flüssigkeit, die sich in den zwischen den Schichten 3, 4 entstehenden Hohlräumen 5 befindet, entstehen Kraftwirkungen auf die Verbindungsstellen 6 (kleine Pfeile in Fig. 5). Dadurch verkürzt sich der aus den Schichten 3, 4 bestehende Aufbau vorzugsweise in der Richtung quer zu der Richtung der Verbindungsstellen 6 (grosse Pfeile 9 in Fig. 5). In weniger starkem Masse entsteht durch diese Anordnung jedoch auch eine solche Verkürzung in der Richtung der linearen Verbindungsstellen 6 (grosse Pfeile 10). Die daraus entstehenden Zugspannungen σ verhalten sich dann in derselben Ordnung, so dass $\sigma_{quer} > \sigma_{längs}$. Die zwischen den Schichten 3, 4 befindliche Flüssigkeit hat bei dieser Anordnung grosse Mobilität; sie kann sowohl längs als auch quer zur Richtung der linearen Verbindungsstellen 6 strömen.

Die Anordnung gemäss Fig. 6 baut gegenüber jener von Fig. 5 annähernd isotrope Zugspannungen auf, da durch das gezeigte

Zickzack-Muster der Verbindungsstellen 6 die Projektionen in beiden Koordinatenrichtungen der Ebene der Schichten 3, 4 annähernd gleich gross sind, oder doch mindestens gleich gross sein können. Damit kann auch ein annähernd isotropes Schrumpfen der Grösse des so mit Verbindungsstellen 6 versehenen Flächenstückes gegeben sein. Anstelle des dargestellten Zickzackmusters mit scharfen Ecken ist auch eine Ausbildung mit Rundungen im Erfindungsgedanken mitenthalten; anstelle eines Zickzackmusters im engeren Sinne tritt dann ein wellenförmiges. Unter diesem Begriffe sind alle solchen Ausbildungen zusammengefasst und zu verstehen.

Die Beweglichkeit der Flüssigkeit in den Hohlräumen 5 zwischen den Verbindungsstellen 6 gemäss Fig. 6 ist durch das vorgegebene Muster insofern eingeschränkt, als sie nicht quer zu den Verbindungsstellen 6 möglich ist.

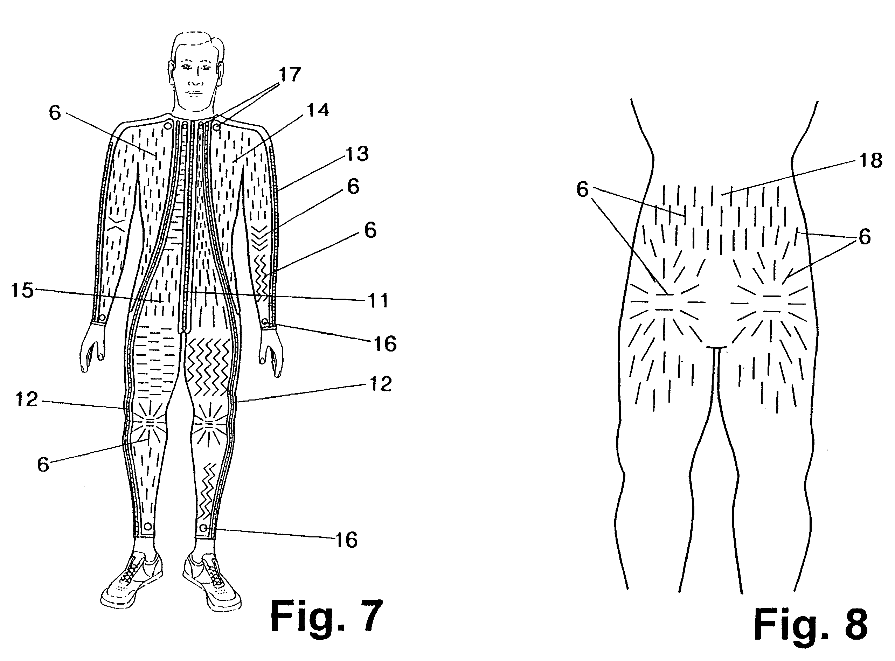

Fig. 7 zeigt den erfindungsgemässen Schutzanzug an einem ersten Ausführungsbeispiel mit Varianten hinsichtlich der Anordnungen der Verbindungsstellen 6. Auch in dieser Darstellung ist der Ueberzug 2 weggelassen. Die Schichten 3, 4 sind, wie bereits erwähnt, aus im wesentlichen undehnbarem Material gefertigt. Diese Tatsache und die Forderung an den erfindungsgemässen Schutzanzug, dass er dicht am Körper des Trägers anliegt, verlangt, dass der Anzug diese Forderung in der sitzenden Stellung des Trägers erfüllt. Das bedeutet - zumindest für das in Fig. 7 dargestellte Ausführungsbeispiel - dass der Schutzanzug auf jeden Träger individuell zugeschnitten ist. Um die Beweglichkeit des Trägers bis zum Einnehmen der sitzenden Stellung zu erhalten, weist das Ausführungsbeispiel gemäss Fig. 7 mehrere Reissverschlüsse 11, 12, 13 auf. Der Reissverschluss 11 verläuft über Brust und Bauch, öffnet den Schutzanzug vom Hals bis zum Schritt. Die zwei Reissverschlüsse 12 verlaufen vom Hals über die Hüften und anschliessend seitlich über Ober- und Unterschenkel bis zu den Fussknöcheln. Die beiden Reissverschlüsse 13, beginnen an den Schultern und verlaufen seitlich über die Arme bis zu den Händen. Im dargestellten Ausführungsbeispiel bleiben Hände und Füsse vom Schutzanzug unbedeckt. Der Schutzanzug kann angezogen und teilweise mittels der Reissverschlüsse 11, 12, 13 geschlossen werden; das definitive Verschliessen erfolgt dann im Flugzeug in sitzender Stellung.

Die in Fig. 7 dargestellten Anordnungen der Verbindungsstellen 6 zeigen auf der linken Seite des Trägers eine andere erfindungsgemässe Ausführungsform als auf der rechten. Im Sinne der Ausführungen zu den Fig. 2 bis 6 sind alle Anordnungen erfindungsgemäss, die durch die Verkürzung des aus den Schichten 3, 4 bestehenden Grundmaterials bewirken, dass von aussen auf die Körperfläche ein dem Innendruck entsprechender kompensatorischer Aussendruck aufgebaut wird, oder dass eine Zugspannung σ entsteht, die mittelbar den genannten Aussendruck erzeugt. Wesentlich an dieser Anordnung ist, dass die Flüssigkeitsströmung primär von oben nach unten, aber auch von links nach rechts ungehindert erfolgen kann. Selbstverständlich begrenzen die Reissverschlüsse 11, 12, 13 diese Querströmung, jedoch nicht in entscheidendem Masse. Unmittelbar angrenzend an jede Hälfte jedes der Reissverschlüsse 11 bis 13 verläuft je eine Verbindungsstelle 6 über deren ganze Länge; damit übertragen die Reissverschlüsse 11 bis 13 Zugspannungen, haben jedoch keinen wie immer gearteten Kontakt mit der in den Hohlräumen 5 enthaltenen Flüssigkeit.

Durch die Anordnung der Reissverschlüsse wird der Schutzanzug gemäss Fig. 7 aufgeteilt in fünf selbständige Teile: Rückenteil (in Fig. 7 nicht sichtbar), linkes und rechtes Oberteil 14, linkes und rechtes Vorderteil 15. Für den Füllvorgang mit der in die Hohlräume 5 einströmenden und dann dort enthaltenen Flüssigkeit verfügt jedes der Teile 14, 15 und Rückenteil über mindestens zwei Ventile 16, 17, wobei die Ventile 16 jeweils am unteren Ende, die Ventile 17 jeweils am oberen Ende jedes Teiles angeordnet sind. Selbstverständlich können die Hohlräume 5 mit der Flüssigkeit auch ein für allemal gefüllt werden. Die Einfüll- und allenfalls die Entlüftungsstelle werden nach dem Füllvorgang versiegelt. Damit entfallen alle genannten Ventile 16, 17.

In Fig. 8 ist die Gesässpartie des mit der Ziffer 18 bezeichneten Rückenteils dargestellt. Im oberen Teil verlaufen die Verbindungsstellen 6 im wesentlichen vertikal; die Hauptspannungsrichtung verläuft horizontal und bewirkt einen Aussendruck auf die Organe der Bauchhöhle. Damit wird deren Volumen begrenzt; das Blut kann sich nicht dort ansammeln. Diese am Rücken gezeigte Anordnung wird auch nach vorne (Fig. 7) fortgesetzt. Das Gesäss wird bedeckt von Strukturen gemäss Fig. 4, sodass jede Gesässhälfte für sich unter Druck von einer dort gezeigten Hohlform eingefasst ist.

Nach unten schliesst sich eine Zone an, in der die Oberschenkel vor allem unter einer längs des Umfanges wirkenden Zugspannung stehen.

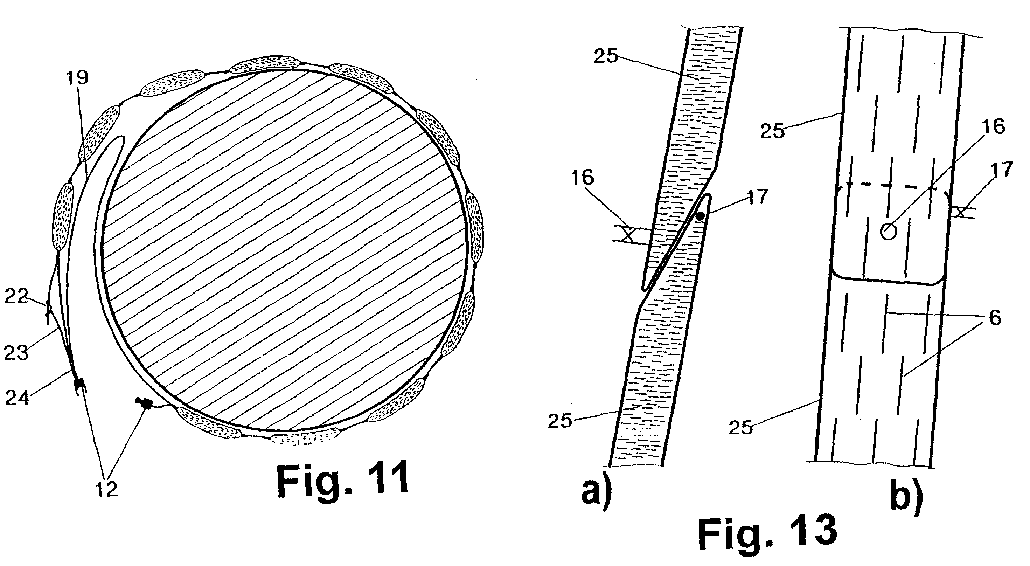

Fig. 9 ist die Schnittdarstellung eines zweiten Ausführungsbeispiels eines Schutzanzuges. Hier wird mindestens auf die den Beinen entlang laufenden Teile der Reissverschlüsse 12 verzichtet. Dafür weist dieses Ausführungsbeispiel einen Einschlag 19 auf. Zum Schliessen des dargestellten Teiles des Schutzanzuges wird dieser Einschlag, der ohne Hohlräume 56 bzw. Verbindungsstellen 6 ausgeführt ist, jedoch aus beiden Schichten 3, 4 bestehen kann, eingeschlagen. Zum Verschliessen ist ein Klettverschluss 20 vorgesehen, dessen am Körper anliegender Teil 21 breiter ausgeführt ist, als sein Gegenstück. Damit kann der Anzug den jeweiligen Bedingungen seines Trägers angepasst werden; allenfalls kann auf einen extensiven Massschnitt solcher Schutzanzüge verzichtet werden. Obwohl für das Bein - Ober- oder/und Unterschenkel - gezeigt, gelten die Ausführungen zu Fig. 9 auch für die Arme und den Oberkörper bis und mit Bauch- Abdominalbereich. Anstelle eines Klettverschlusses 20 kann auch ein Verschluss mit einstellbaren Riemen in Verbindung mit einem Reissverschluss vorgesehen werden, wie in Fig. 11 dargestellt. Anstelle eines durchlaufenden Klettverschlusses 20 kann dieser erfindungsmässig auch in eine Vielzahl von textilen Laschen aufgeteilt sein, von denen jede als Klettverschluss 20 ausgerüstet ist und mit dem durchlaufenden am Körper anliegenden Teil 21 schliesst.

Die Detaildarstellung von Fig. 10 weist - in Ergänzung zu jener von Fig. 9 - einen Reissverschluss 12 auf. Damit kann der Anzug seitlich ganz geöffnet werden, wie in Fig. 7 gezeigt; die Anpassung an die Bedingungen des Trägers erfolgen, wie gemäss Fig. 9 ausgeführt, über den Klettverschluss 20, 21.

Im Ausführungsbeispiel gemäss Fig. 11 geschieht die Anpassung über Riemen 23 und Schnallen 22, von denen eine Vielzahl über die ganze Länge des Anzuges vorhanden ist. Die Riemen 23 sind befestigt an einer verstärkten Partie 24 des Schutzanzuges. An diese schliesst der eine Teil des Reissverschlusses 12 an, dessen anderer Teil der nicht eingeschlagenen Partie des Schutzanzuges befestigt ist. Die Auflösung des durchlaufenden Klettverschlusses in eine Vielzahl von Laschen ist auch hier eine Variante im Sinne der Erfindung.

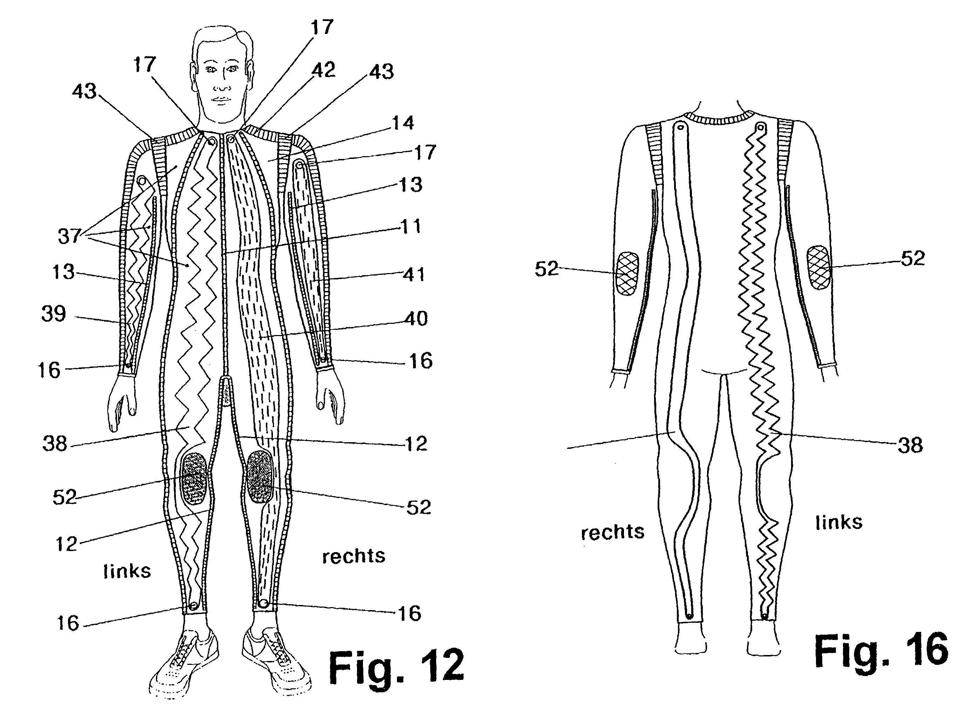

Ein drittes Ausführungsbeispiel des Schutzanzuges zeigt Fig. 12. Diese Figur ist aufgeteilt in eine linke und eine rechte Bildhälfte, von denen jede eine Variante des Ausführungsbeispieles zeigen. Beiden Varianten ist gemeinsam, dass der Hauptteil des Schutzanzuges bzw. seines aktiven Teils ohne das Futter 1 und den Ueberzug 2, aus einem dehnungsarmen, jedoch luft- und dampfdurchlässigen textilen Material gefertigt ist. Dieser Hauptteil trägt das Bezugszeichen 37. Ueber die ganze Länge des Schutzanzuges läuft in Fig. 12 links ein wellenförmiges Band 38, über den ganzen Aermel links ein solches mit der Nummer 39. Die Bänder 38, 39 bestehen aus den Schichten 3, 4, welche in bereits geschilderter Art verschweisst, verklebt oder vernäht sind.

Die Verbindung von Hauptteil 37 mit den wellenförmigen Bändern 38, 39 wird durch Nähen und/oder Schweissen bzw. Kleben erzeugt. Die druckabhängige und anisotrope Schrumpfung der Bänder 38, 39, die je als zusammenhängender Hohlraum 5 konzipiert sind, reicht aus, um über das textile Material des Hauptteiles den dazu notwendigen Druck über seine Zugspannung aufzubauen. Jedes Band 38, 39 weist wiederum ein unteres Ventil 16 und ein oberes Ventil 17 auf.

Die Variante von Fig. 12 rechts zeigt - als einzigen Unterschied - ein gestrecktes Band 40 entlang des Körpers, ein gestrecktes Band 41 entlang des Aermels. Beide Bänder 40, 41 tragen ein Muster der Verbindungsstellen 6 gemäss Fig. 5, welches ebenfalls eine anisotrope Schrumpfung bewirkt. Sowohl Schulterpartie 42 des Schutzanzuges, als auch Verbindungen 43 des Oberteils 14 mit den Aermeln sind hier aus elastischen textilen Materialien gefertigt, was die Beweglichkeit des Trägers erhöht.

Dort wo in sitzender Stellung des Trägers im Schutzanzug Knie und Ellbogen sind, weist dieser gemäss Fig. 12 je einen elastischen Einsatz 52 auf. Nicht dargestellt, jedoch im Erfindungsgedanken enthalten sind nach oben oder/und nach unten verzweigte Bänder 38 bis 41. Damit können der Spannungsverlauf und die anatomische Anpassung optimiert werden.

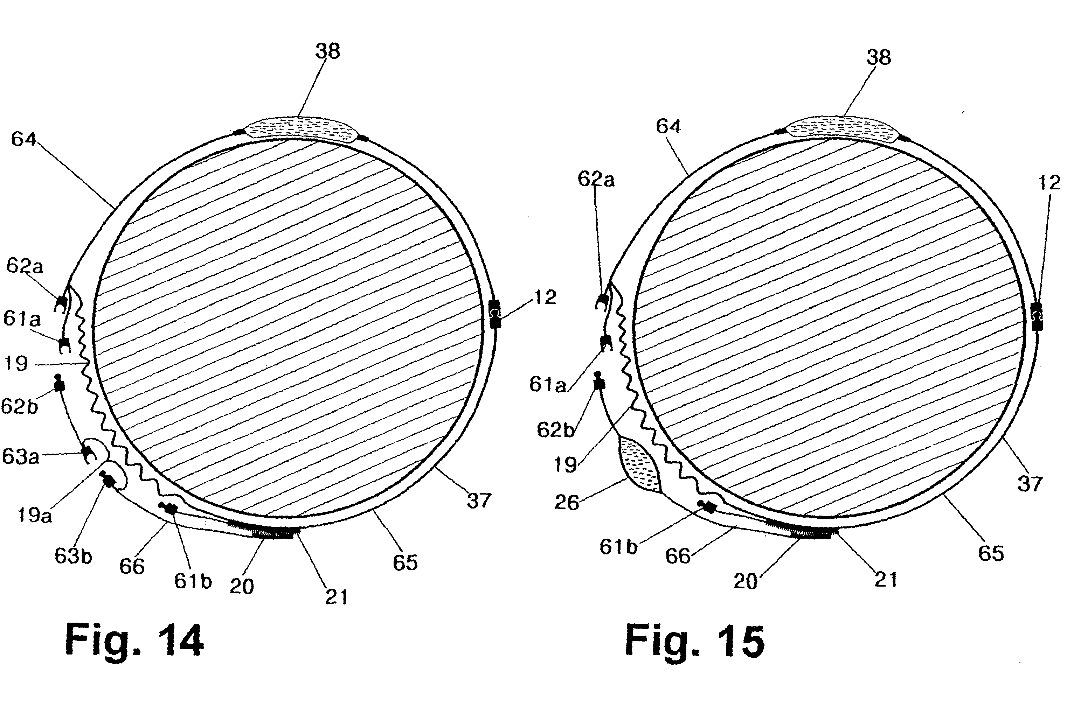

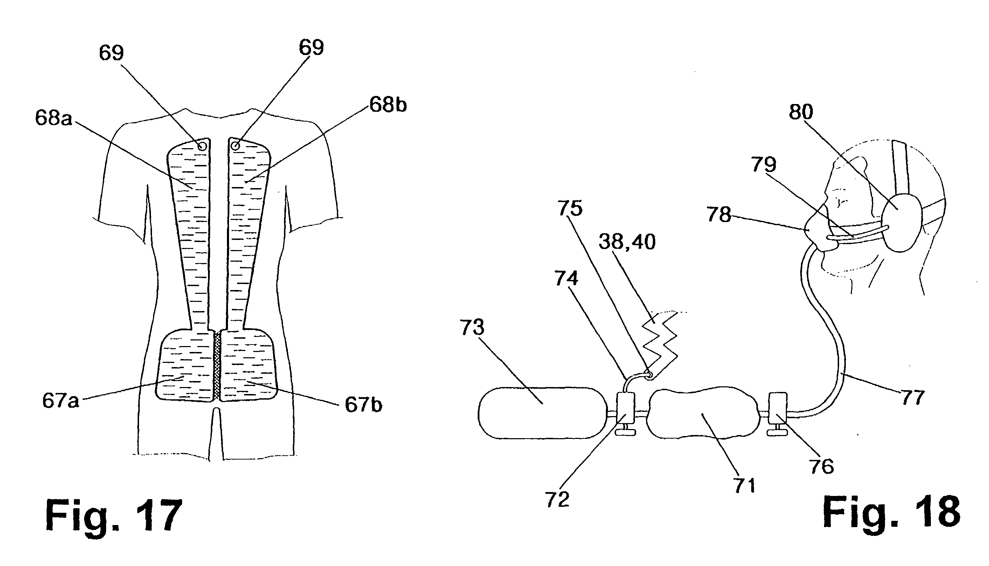

Sowohl bei der Ausführung gemäss Fig. 7, als auch bei jener nach Fig. 12 bzw. Fig. 16 ist es erfinderisch, an Stellen, wo in der sitzenden Stellung des Trägers Knickfalten entstehen, beispielsweise in der Ellenbeuge und der Leistengegend, biegeelastische jedoch knicksteife Elemente, beispielsweise Röhrchen einzulegen. Damit kann die hydrostatische Verbindung noch besser gesichert werden. Die wellenförmigen Bänder 38, 39, 40, 41, lassen sich in unabhängige Bänder 25 unterteilen. Diese Unterteilung ist nachfolgend anhand von Fig. 13 näher erläutert.

Fig. 13 zeigt die erfindungsgemässe Unterteilung von Bändern 38 bis 41, Fig. 13a im Querschnitt, Fig. 13b in einer Draufsicht. Obwohl hier an Bändern 40 gezeigt, gilt das nachfolgend Ausgeführte in gleicher Weise für die anderen Ausführungsformen. Das Band 40 ist in seiner Länge unterteilt in abgeschlossene Bandteile 25, die je über ein unteres und ein oberes Ventil 16, 17 verfügen. Die Bandteile 25 sind so angeordnet, dass sie einander über einen Teil ihrer Länge überlappen und an ihren Verbindungsstellen 6 und Rändern miteinander verbunden sind. Steigt nun aufgrund von Beschleunigungseffekten der Druck im oberen Bandteil 25, so wird diese Druckerhöhung auf das untere Bandteil 25 übertragen.

Der Vorteil dieser Lösungsvariante liegt in einer erhöhten Sicherheit, da bei Zerstörung eines Bandteiles 25 nur ein Teilausfall der ganzen Vorrichtung vorliegt, der überdies von den anderen, in Bandteile 25 gegliederten, Bändern 40 mindestens teilweise kompensiert werden kann. Selbstverständlich ist diese Lösungsvariante auch für das Ausführungsbeispiel gemäss Fig. 7 anwendbar. Dann sind die Ueberlappungsstellen einfach breiter auszuführen.

Verschlossen wird dieses Ausführungsbeispiel von Fig. 12 gemäss der Darstellung von Fig. 14. Diese Darstellung gilt einerseits für Arme und Beine gleichermassen, anderseits für die Schliessung des ganzen Schutzanzuges, wie nachfolgend dargestellt. Arm- und Beinröhren sind durch den Reissverschluss 12 ganz zu öffnen, wie gemäss Fig. 12. Verbunden sind die mit den Ziffern 64, 65 bezeichneten Hälften durch den Einschlag 19, der aus einem dünnen textilen Material bestehen kann, da er nicht durch Spannkräfte beansprucht wird. Die mit 65 bezeichnete Hälfte trägt den einen Teil 21 des Klettverschlusses, der andere Teil 20 ist an einem Lappen 66 befestigt. Der Klettverschluss 20, 21 dient zur Anpassung an die momentane Situation des Trägers und wird vor Besteigen des Flugzeuges eingestellt. Zum Anziehen des Schutzanzuges sind alle Reissverschlüsse offen; dann wird der Reissverschluss 12 geschlossen; der Träger kann sich frei bewegen. Ein weiterer Reissverschluss, dessen Hälften mit 61a, 61b bezeichnet sind, überbrückt den Einschlag. Damit ist die Beweglichkeit etwas eingeschränkt, das Besteigen des Flugzeuges dank der elastischen Einsätze 52 jedoch ohne weiteres möglich. Anschliessend wird ein weiterer, dritter Reissverschluss 62a, 62b geschlossen. Ein letzter, vierter, Reissverschluss 63a, 63b überbrückt einen zweiten kleineren Einschlag 19a. Die Armröhren weisen diese Ausbildung auf, wie ebenfalls die Beinröhren; die Reissverschlüsse 61a, b, 62a, b, 63a, b der Beinröhren jedoch erstrecken sich vom Fussknöchel bis zum Halsausschnitt, wie in Fig. 12 anhand des Klettverschlusses 44 gezeigt. Mit dem Schliessen des vierten Reissverschlusses 63a, b ist sowohl der Träger auf die sitzende Stellung fixiert, als auch eine dem Geradeausflug entsprechende Grundspannung des Schutzanzuges aufgebaut, dergestalt, dass die den Ausgleichsdruck und die Ausgleichsspannung aufbauende Flüssigkeit in den Hohlräumen 5 auf die ganze durch den Schutzanzug erfasste Körperlänge verteilt ist. Im Schritt des Schutzanzuges kann eine Oeffnung 46 für das Genitale vorgesehen werden, diese jedoch auch durch ein elastisches textiles Material verschlossen sein.

Flugversuche haben keine aufgrund der Oeffnung 46 sich ergebenden gesundheitliche Beeinträchtigungen ergeben. Hingegen verbessert sie die Beweglichkeit des Trägers des Schutzanzuges.

Eine Variante zur Lösung gemäss Fig. 14 ist in Fig. 15 dargestellt. Hier entfällt der vierte Reissverschluss 63a, b ebenso der kleine Einschlag 19a. An deren Stelle tritt ein schematisch als Hohlraum dargestelltes Spannelement 26 analog zu den Bändern 38 bis 41. Dieses Spannelement 26 erstreckt sich über die ganze Länge des in Fig. 15 im Querschnitt dargestellten Verschlusses, kann aber auch in mehrere in sich abgeschlossene Stücke unterteilt sein.

Nach dem Schliessen der Reissverschlüsse 61a, b; 62a, b; und dem Klettverschluss 20, 21 wird das Spannelement 26 beispielsweise durch Druckluft beaufschlagt, deren Druck höher ist, als der in den tiefstgelegenen Hohlräumen 5 bei der grösstmöglichen Kurven-Beschleunigung.

Durch die Gestaltung der Breite des Spannelementes 26 kann die Grundspannung σ des Schutzanzuges genau auf die gewünschte erforderliche Grösse eingestellt werden.

Fig. 16 zeigt wiederum eine Bildhälfte links und eine solche rechts mit je einer Variante der Rückseite des Schutzanzuges. Die Begriffe "links" und "rechts" sind in Bezug auf Fig. 14 vertauscht. Die zwei Varianten bestehen wiederum im Einsatz eines Zickzackbandes 38 links und eines gestreckten Bandes 40 rechts; beide Bänder erstrecken sich von der Schulterpartie bis zum Fuss des Trägers. Selbstverständlich werden in einer bestimmten Ausführungsform die linke und die rechte Seite von Vorder- und Rückenteil gleich ausgeführt, hingegen kann die Vorderseite ein anderes Muster der Hohlräume 5 aufweisen als die Rückseite.

In der Umgebung des Knies sind beide Bänder 38, 40 schmaler ausgeführt. Damit entsteht über das Knie keine unpassend hohe Spannung. Ferner wird damit Platz geschaffen für den elastischen Einsatz 52

Fig. 16 zeigt die Rückansicht des Ausführungsbeispiels gemäss Fig. 12, wiederum in zwei Ausführungsvarianten hinsichtlich der Bänder 38, 40. Es ist ebenfalls erfindungsgemäss, die Bänder 38, 40 hinsichtlich deren Breite zu variieren, um die richtige Spannung aufzubauen.

In der Region der Ellbogen trägt das Beispiel von Fig. 16 elastische Einsätze 52.

Eine erfindungsgemässe Erweiterung ist ein flüssigkeitsgefüllter Einsatz 67 a, b gemäss Fig. 17. Dieser wird unter dem Schutzanzug getragen und ist hier - wie gezeichnet - in die beiden Hälften 67 a, b aufgeteilt, die jedoch untereinander verbunden sein können. Jeder Einsatz 67 a, b ist mit einem sich nach oben erstreckenden Reservoir 68 a, b verbunden; die beiden Reservoirs 68 a, b werden jedoch ausserhalb des aus den Schichten 3, 4 bestehenden Schutzanzuges, jedoch vorzugsweise unter dem Ueberzug 2 getragen. Damit unterliegen nur die Einsätze 67 a, b der in den Schichten 3, 4 und dem Hauptteil 37 herrschenden Zugspannung. Der Zweck der Einsätze 67 a, b ist die Schaffung eines Ausgleichsdruckes auf die Bauch/Abdominalregion. Je nach den anatomischen Eigenschaften des Trägers verläuft der Schutzanzug zwischen den beiden Darmbeinen relativ flach. Dies bedeutet, dass das Bauchvolumen relativ stark zunehmen kann, bis der Innendruck jenem entspricht, der durch die Zugspannung im Anzug kompensiert wird. Die Folgen davon können einerseits eine immer noch unerwünschte Blutansammlung im Bauchraum, anderseits eine Belastung des Zwerchfells sein. Letztere erschwert vor allem die Bauchatmung bis zum Verunmöglichen des Ausatmens, welches von einer Entspannung, also Aufwölbung des Zwerchfells bewirkt ist.

Bei G-Belastung des Trägers fliesst soviel Flüssigkeit aus den Reservoirs 68 a, b in die Einsätze 67 a, b, bis der Binnendruck des Bauchraumes dem kompensatorisch aufgebauten der Einsätze 67 a, b und des Reservoirs 68 a, b entspricht. Die Reservoirs 68 a, b können am Schutzanzug gefestigt oder allenfalls an einem Band um den Hals getragen werden. Ferner liegt es im Gedanken dieser Erweiterung, dass die beiden Einsätze 67 a, b auch zu einem einzigen Volumen vereinigt werden können.

Fig. 18 ist die Darstellung eines zweiten Ausführungsbeispiels einer druckbeaufschlagten Bauchblase in Analogie zum flüssigkeitsgefüllten Einsatz 67a, b von Fig. 17. Eine aus einem Elastomer gefertigte, anatomisch geformte Blase 71 ist das Mitteldruckreservoir eines Lungenautomaten, ähnlich, wie er auch aus dem Tauchsport bekannt ist. Gespeist wird die Blase über ein druckbeaufschlagtes Regelventil 72 vom bordeigenen Hochdruckreservoir 73 für Atemluft, hier schematisch als Druckflasche dargestellt. Das Regelventil 72 reduziert den Druck des Atemgases des Hochdruckreservoirs 73 auf einen Druck, der wenig über dem Lungendruck liegt. Gesteuert wird es über eine Druckleitung 74, die mit einem der Bänder 38, 40 kommuniziert. Die Druckleitung 74 mündet in der Abdominalregion an einer Uebernahmestelle 75 in eines der Bänder 38, 40 und übernimmt den an der Uebernahmestelle 75 herrschenden hydrostatischen Druck als Regelgrösse. Hiezu gibt es zwei Varianten: Entweder liegt das Regelventil 72 auf der gleichen hydrostatischen Höhe, wie die genannte Uebernahmestelle 75, dann kann die Druckleitung 74 flüssigkeitsgefüllt sein. Oder die Druckleitung 74 führt Luft - oder allgemeiner: ein Gas - dann steuert der hydrostatische Druck an der Uebernahmestelle ein Druckreduzierventil (nicht dargestellt) und speist mit dem aus dem Hochdruckreservoir 73 stammenden und am reduzierten Druck die Druckleitung 74.

Die Blase 71, unter dem Schutzanzug getragen, wird von seiner Spannung σ einerseits und vom durch das Regelventil 72 auf Mitteldruck $p_m$ reduzierten Hochdruck beaufschlagt. Durch die Art der apparativen Definition von $p_m$ entspricht dieser dem hydrostatischen Druck in der Abdominalregion, so dass die Bauchorgane entlastet und das Zwerchfell von deren momentaner Gewichtskraft entlastet werden. Die genaue Grösse von $p_m$ ist durch das Regelventil 72 für den individuellen Fall einstellbar.

An die Blase 71 schliesst sich ein weiteres, ebenfalls von den Lungenautomaten des Tauchsportes bekanntes zweites Regelventil 76 an, das auf die Atemtätigkeit anspricht. Damit liegt der Atemdruck $p_a$ nur wenig unter dem Mitteldruck $p_m$. Das Regelventil 76 speist den mit 77 bezeichneten Atemschlauch und eine Atemmaske 78.

Beim Einatmen entleert sich die Blase 71 teilweise um ein Volumen, das kleiner ist, als das Atemvolumen. Um diese Volumina gleich zu machen, kann das zweite Regelventil 76 eine Ueberströmeinrichtung aufweisen, die einen vorbestimmbaren, einstellbaren Anteil der Atemluft direkt über das Regelventil 76 nach aussen abbläst.

In den Fliegerhelm (nicht dargestellt) oder von diesem gesondert, trägt der Pilot eine schalenförmige Hörgarnitur 80, die dicht am Kopf anliegt. Von dieser zur Atemmaske 78 führt je ein Verbindungsschlauch 79. Damit kann sichergestellt werden, dass beide Seiten des Trommelfells vom gleichen Druck - dem Atemdruck - beaufschlagt werden. Atemmaske 78 und Hörgarnitur 80 gehören ohnehin zur Pilotenausrüstung; der einzige Zusatz sind die beiden Verbindungsschläuche 79.

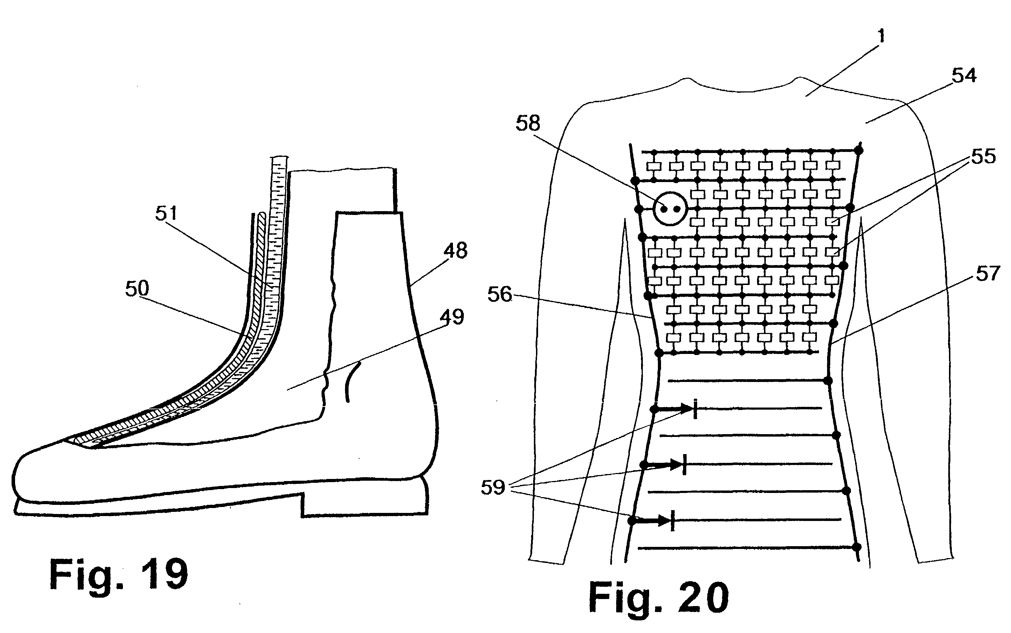

Fig. 19 zeigt einen Fliegerstiefel 48 in Seitenansicht, teilweise aufgebrochen. Zwischen dem Fuss des Trägers - mit dem Bezugszeichen 49 versehen - und einer am Stiefel 48 befestigten normalen Lasche 50 ist eine doppelwandige, wiederum aus den Schichten 3, 4 bestehende zweite Lasche 51 eingelegt, die einen flüssigkeitsgefüllten Hohlraum 5 aufweist. Die zweite Lasche 51 ist, bezogen auf alle beschriebenen Ausführungsbeispiele des Schutzanzuges, als Fortsetzung des Beinteiles vorgesehen; der Hohlraum 5 kommuniziert mit jenem des Beinteiles.

Bei laufendem Triebwerk des Flugzeuges, auch am Boden, ist die Einstellung und Aufrechterhaltung einer angenehmen Temperatur im Cockpit im allgemeinen kein Problem. In der Vorbereitungsphase, wenn der Pilot bereits im Cockpit sitzt, das Triebwerk jedoch noch steht, kann es je nach Situation entweder sehr heiss oder unangenehm kalt sein. Dies natürlich auch dann, falls die Klimatisierung des Cockpits an sich ungenügend ist oder ausfällt. Eine Vorrichtung, die Bestandteil ist des Schutzanzuges, ist in Fig. 20 schematisch dargestellt. Sie zeigt einen Teil des Futters 1. Dieses besteht beispielsweise aus zwei mittels bekannter Verbindungstechnik für Textilien verbundenen Lagen eines Gewirkes. Zwischen den Lagen, von denen die innere Lage mit der Ziffer 54 bezeichnet ist, befindet sich ein Arrangement von Peltier-Elementen 55. Diese sind jeweils elektrisch leitend angeschlossen sowohl an einen Leiter 56, der den einen Pol einer Gleichspannung führt - oder an einen mit ihm verbundenen Leiter - , als auch an einen den anderen Pol führenden Leiter 57 oder an einen mit ihm verbundenen. Zusammengeführt sind die Leiter 56, 57 in eine Anschlussdose 58, die durch die äussere, nicht dargestellte Lage des Futters 1 durchgeführt ist und mit einem entsprechenden Gegenstück (nicht dargestellt) im aktiven Teil des Schutzanzuges und im Ueberzug 2 korrespondiert.

Je nach der eingestellten Polarität der Gleichspannung - und damit der Fliessrichtung des die Peltier-Elemente 55 durchsetzenden Gleichstromes - ändert auch der Wärmeenergiestrom von oder zu den Peltier-Elementen 55 seine Richtung. Mit der gleichen Vorrichtung kann also geheizt oder gekühlt werden.

Das Hochtemperatur-Reservoir bei Heizstellung, das Niedertemperatur-Reservoir bei Kühlstellung der Vorrichtung gemäss Fig. 20 befindet sich flugzeugseitig.

Die Leiter 56, 57 sind hochflexibel und isoliert ausgeführt. Der Anschluss der Peltier-Elemente 55 wird in bekannter lötfreier Verbindungstechnik ausgeführt. Halbleiter-Peltier-Elemente mit hohem thermischen Wirkungsgrad sind verfügbar. Das Arrangement von Peltier-Elementen 55 ist in Fig. 20 schematisch für die Vorderseite des Oberkörpers dargestellt. Selbstverständlich lässt es sich in gleicher oder entsprechender Weise auch für den Rückenbereich und die Extremitäten ausführen. Unter Verwendung von Dioden lassen sich auch bestimmte Bereiche des Arrangements von Peltier-Elementen 55 nur zum Heizen oder nur zum Kühlen einrichten. Solche Dioden 59 sind in Fig. 20 für den Bauchbereich stellvertretend eingezeichnet.

Ferner lassen sich die Peltier-Elemente 55 in mehrere unabhängige Stromkreise arrangieren, womit die Möglichkeit besteht, selektiv gewisse Körperteile zu heizen oder zu kühlen. Die Anschlussdose 58 weist dann die entsprechende Zahl von Anschlüssen auf.

## Patentansprüche

1. Anzug zum Schutz vor Beschleunigungskräften, wie sie in Hochleistungsflugzeugen beim Fliegen von Kurven auftreten, wobei mindestens Teile des Anzuges doppelwandig ausgeführt sind mit einer innenliegenden Schicht (3) und einer aussenliegenden Schicht (4), welche an Verbindungsstellen (6) miteinander verbunden sind und zwischen den Verbindungsstellen (6) liegende Hohlräume (5) bilden, welche mit einer Flüssigkeit gefüllt sind, die beim Entstehen von Beschleunigungen ≠ 1g in der momentanen und lokalen Z-Achse einen dem Binnendruck des Trägers des Anzuges entsprechenden kompensatorischen Aussendruck aufbaut, wobei

   - die äussere Schicht (4) aus einem wenig dehnbaren Material besteht,
   - die Hohlräume (5) eine von den Fussgelenken bis zum Hals des Trägers des Anzuges durchgehende hydrostatische Drucksäule bilden, die innenliegende Schicht (3) auf den Körper des Trägers einen der Höhe der Flüssigkeitssäule und der wirkenden Beschleunigung in der momentanen und lokalen Z-Achse entsprechenden Druck ausübt,
   - in der aussenliegenden Schicht (4) durch diesen Druck eine Zugspannung aufgebaut wird,
   - der aus den Schichten (3, 4) des Anzuges Mittel zum Anpassen des Anzuges an die momentanen Körperbedingungen seines Trägers aufweist, der Anzug Mittel zum Schliessen aufweist, die gleichzeig geeignet sind, die für den Geradeausflug notwendige Grundspannung des Anzuges aufzubauen.

dadurch gekennzeichnet, dass

- der aktive Teil des Anzuges mindestens teilweise aus den zwei an den Verbindungsstellen (6) mindesten teilweise miteinander verbundenen Schichten (3, 4) besteht, sodass die Hohlräume (5) zwischen den Verbindungsstellen (6) entstehen,
- auch die innenliegende Schicht (3) aus wenig dehnbarem, im Bereich der Verbindungsstellen (6) und der Hohlräume (5) flüssigkeitsdichten textilen Material besteht,
- die Verbindungsstellen (6) ausserhalb der Hohlräume (5) durch einschichtige aus wenig dehnbarem textilen Material bestehende Verbindungsteile (37) verbunden sein können, die die aufgebaute Zugspannung auf die Körperoberfläche des Trägers des Anzuges übertragen können,
- die die Hohlräume (5) begrenzenden Verbindungsstellen (6) in solchen Strukturen angeordnet sind, dass die durch den Druck der in den Hohlräumen (5) befindlichen Flüssigkeit bewirkte Verkürzung des Abstandes benachbarter Verbindungsstellen (6), die beabsichtigte Zugspannung nach Richtung und Grösse aufbauen und an benachbarte Elemente (4, 37) des Anzuges weiterleiten kann.

2. Anzug zum Schutz vor Beschleunigungskräften gemäss Patentanspruch 1, dadurch gekennzeichnet, dass er im wesentlichen den ganzen Körper mit Ausnahme von Hals, Kopf, Händen und Füssen bedeckt.

3. Anzug zum Schutz vor Beschleunigungskräften gemäss Patentanspruch 1 oder 2, dadurch gekennzeichnet, dass ein Futter (1) und ein Ueberzug (2) vorhanden sind, wobei das Futter (1) unter, der Ueberzug (2) über dem aktiven Teil des Anzuges getragen wird.

4. Anzug zum Schutz vor Beschleunigungskräften gemäss Patentanspruch 3, dadurch gekennzeichnet, dass Futter (1) und Ueberzug (2) teilweise mit dem aktiven Teil des Anzuges verbunden sind.

5. Anzug zum Schutz vor Beschleunigungskräften gemäss Patentanspruch 1 oder 2, dadurch gekennzeichnet, dass die Hohlräume (5) und die sie abteilenden Verbindungsstellen (6) sich vollständig über den ganzen Anzug erstrecken und nur die Orte, wo die Mittel zum Anpassen und Schliessen des Anzuges sich befinden, davon ausgenommen sind.

6. Anzug zum Schutz vor Beschleunigungskräften gemäss Patentanspuch 1 oder 2, dadurch gekennzeichnet, dass die Hohlräume (5) und die sie abteilenden Verbindungsstellen (6) in Bändern angeordnet sind, die sich über die ganze Länge des Anzuges erstrecken.

7. Anzug zum Schutz vor Beschleunigungskräften gemäss Patentanspruch 5 oder 6, dadurch gekennzeichnet, dass die einzelnen Verbindungsstellen (6) im wesentlichen auf zu einander parallelen Linien liegen und die Abstände der auf einer einzelnen Linie liegenden Verbindungsstellen (6) etwa deren seitlichen Abständen entsprechen, und diese Anordnung von Verbindungsstellen (6) dort eingesetzt werden kann, wo Zugspannungen vorwiegend senkrecht zur Richtung der Verbindungsstellen (6) aufgebaut werden soll.

8. Anzug zum Schutz vor Beschleunigungskräften gemäss Patentanspruch 5 oder 6, dadurch gekennzeichnet, dass

- die Verbindungsstellen (6) gerade Strecken sind, die im wesentlichen parallel zueinander verlaufen, deren Länge etwa deren seitlichen Abständen entsprechen,
- die einzelnen Verbindungsstellen (6) im wesentlichen auf zwei Scharen von parallelen Linien liegen, die etwa um den halben seitlichen Abstand zweier benachbarter Verbindungsstellen (6) gegeneinander versetzt sind, und die auf den versetzten parallelen Linien liegenden Verbindungsstellen (6) etwa symmetrisch liegen zur Lücke der Verbindungsstellen (6) auf den nicht versetzten parallelen Linien, und diese Anordnung von Verbindungsstellen (6) dort eingesetzt werden kann, wo Zugspannungen vorwiegend senkrecht zur Richtung der Verbindungsstellen, in geringem Masse auch in deren Richtung, aufgebaut werden soll.

9. Anzug zum Schutz vor Beschleunigungskräften gemäss Patentanspruch 5 oder 6, dadurch gekennzeichnet, dass die einzelnen Verbindungsstellen (6) gerade Strecken sind, die im wesentlichen radial um einen Punkt angeordnet sind und diese Anordnung von Verbindungsstellen (6) eingesetzt werden kann, wo sowohl Zugspannungen auf umlaufenden Linien aufgebaut, als auch eine korbförmige Verformung der untereinander verbundenen Schichten (3, 4) bewirkt werden soll.

10. Anzug zum Schutz vor Beschleunigungskräften gemäss Patentansprüchen 6 und 7 oder 8, dadurch gekennzeichnet, dass die sich über die ganze Länge des Anzuges erstrekkenden Bänder wellenförmig gestaltet sind.

11. Anzug zum Schutz vor Beschleunigungskräften gemäss Patentanspruch 6, dadurch gekennzeichnet, dass die sich über die ganze Länge des Anzuges erstreckenden Bänder wellenförmig gestaltet sind.

12. Anzug zum Schutz vor Beschleunigungskräften gemäss Patentansprüchen 6 und 7 oder 8, dadurch gekennzeichnet, dass die sich über die ganze Länge des Anzuges erstrekkenden Bänder im wesentlichen gestreckte Form aufweisen.

13. Anzug zum Schutz vor Beschleunigungskräften gemäss Patentanspruch 1 oder 2, dadurch gekennzeichnet, dass die Mittel zum Anpassen des Anzuges an die momentanen Körperbedingungen seines Trägers aus Riemen und Schnallen bestehen, die über die ganze Länge des Anzuges angeordnet sind.

14. Anzug zum Schutz vor Beschleunigungskräften gemäss Patentanspruch 1 oder 2, dadurch gekennzeichnet, dass die Mittel zum Anpassen des Anzuges an die momentanen Körperbedingungen seines Trägers aus Klettverschlüssen bestehen, die sich über die ganze Länge des zu schliessenden Teiles des Anzuges erstrecken.

15. Anzug zum Schutz vor Beschleunigungskräften gemäss Patentanspruch 14, dadurch gekennzeichnet, dass die Klettverschlüsse (20, 21) aus einer Vielzahl von Laschen bestehen.

16. Anzug zum Schutz vor Beschleunigungskräften gemäss Patentanspruch 1 oder 2, dadurch gekennzeichnet, dass die Mittel zum Schliessen aus Reissverschlüssen bestehen.

17. Anzug zum Schutz vor Beschleunigungskräften gemäss Patentansprüchen 1 oder 2 und 16, dadurch gekennzeichnet, dass die Mittel zum Anpassen des Anzuges an die momentanen Körperbedingungen seines Trägers aus pneumatischen Spannelementen (25) bestehen, die sich über die ganze Länge der Reissverschlüsse erstrecken und parallel zu diesen angeordnet sind

- die Spannelemente (25) aus einem aus wenig dehnbarem und luftdichtem textilen Material gefertigt sind und längs zu deren Erstreckung Verbindungsstellen (6) aufweisen können

- die Spannelemente (25) durch das Beaufschlagen durch ein unter Druck stehendes Fluid die Grundspannung σ des Anzuges aufbauen können.

18. Anzug zum Schutz vor Beschleunigungskräften gemäss Patentansprüchen 13 bis 15, dadurch gekennzeichnet, dass der Anzug entlang den Mitteln zum Schliessen einen Einschlag (19) aufweist und die Mittel zum Schliessen so angeordnet sind, dass der Einschlag (19) beim Schliessen überbrückt wird, so dass die Zugspannung im Anzug über die Mittel zum Schliessen verläuft und der Einschlag (19) davon völlig entlastet ist.

19. Anzug zum Schutz vor Beschleunigungskräften gemäss Patentansprüchen 14 bis 16 und 18, dadurch gekennzeichnet, dass ein erster Reissverschluss (12) vorhanden ist, der den Einschlag (19) schliesst und der Klettverschluss (20, 21) so angeordnet ist, dass sein feststehender Teil (21) am Körper anliegend, der bewegliche Teil (20) am Ende des Einschlages (19) befestigt ist, der geschlossene Klettverschluss (20, 21) also den Einschlag (19) und den Reissverschluss (12) überbrückt.

20. Anzug zum Schutz vor Beschleunigungskräften gemäss Patentansprüchen 14 bis 16 und 18, dadurch gekennzeichnet, dass

- erster Reissverschluss (12) vorhanden ist, der den zu schliessenden Teil des Anzuges schliesst,

- ein den Einschlag (19) überbrückender zweiter Reissverschluss (61a, b) vorhanden ist,

- ein dritter Reissverschluss (62a, b) vorhanden ist, dessen eine Hälfte (62a) am zu schliessenden Teil des Anzuges, dessen andere Hälfte (62b) am Ende eines Lappens (66) befestigt ist, der sich über die ganze Länge des zu schliessenden Teiles des Anzuges erstreckt,

- der Lappen (66) selbst einen zweiten über seine ganze Länge sich erstreckenden Einschlag (19a) aufweist,

- ein vierter Reissverschluss (63a, b) vorhanden ist, welcher den zweiten Einschlag (19a) überbrückt und womit dem Anzug die notwendige Grundspannung erteilt werden kann,

- der Klettverschluss (20, 21) den Lappen (66) mit dem zu schliessenden Teil des Anzuges verbindet.

21. Anzug zum Schutz vor Beschleunigungskräften gemäss Patentansprüchen 14 bis 18, dadurch gekennzeichnet, dass

- ein erster Reissverscluss (12) vorhanden ist, der den zu schliessenden Teil des Anzuges schliesst,

- ein den Einschlag (19) überbrückender zweiter Reissverschluss (61a, b) vorhanden ist,

- ein dritter Reissverschluss (62a, b) vorhanden ist, dessen eine Hälfte (62a) am zu schliessenden Teil des Anzuges, dessen andere Hälfte (62b) am Ende eines Lappens (66) befestigt ist, der sich über die ganze Länge des zu schliessenden Teiles des Anzuges erstreckt,

- das pneumatische Spannelement (25) im Lappen (66) eingeschaltet ist,
- der Klettverschluss (20, 21) den Lappen (66) mit dem zu schliessenden Teil des Anzuges verbindet.

22. Anzug zum Schutz vor Beschleunigungskräften gemäss Patentanspruch 5 oder 6, dadurch gekennzeichnet, dass

- die durch die Verbindungsstellen (6) strukturierten und in den dadurch entstehenden Hohlräumen (5) eine Flüssigkeit enthaltenden Schichten (3, 4) als in der Höhe abgeschlossene Bereiche ausgestaltet sind, von denen jeder über Ventile (16, 17) zum Füllen und Entlüften verfügt,
- diese Bereiche am Anzug überlappend angeordnet sind, so dass der im oberen Bereich unten herrschende hydrostatische Druck auf den oberen Teil des unteren Bereiches übertragen werden kann.

23. Anzug zum Schutz vor Beschleunigungskräften gemäss Patentansprüchen 1 oder 2 oder 3 oder 4, dadurch gekennzeichnet, dass er

- er einen flüssigkeitsgefüllten Einsatz (67a, b) aufweist, welcher innerhalb des Anzuges in der Bauch/Abdominalregion angeordnet ist und äusserlich mit dem Anzug verbunden sein kann,
- der Einsatz (67a, b) mit einem sich nach oben erstreckenden Reservoir (68a, b) verbunden ist, welches ausserhalb des Anzuges angeordnet und mit diesem verbunden ist, welches Reservoir (68a, b) ebenfalls flüssigkeitsgefüllt ist, wobei bei Erhöhung der Beschleunigungsbelastung Flüssigkeit aus dem Reservoir (68a, b) in den Einsatz (67a, b) nachfliessen und den äusseren Druck auf die Bauch-/Abdominalregion vergrösserm kann.

24. Anzug zum Schutz vor Beschleunigungskräften gemäss einem der Ansprüche 1 bis 22, dadurch gekennzeichnet, dass

- eine aus einem Elastomer gefertigte anatomisch geformte Blase (71) vorhanden ist, die innerhalb des Anzuges in der Bauch-/Abdominalregion angeordnet ist und äusserlich mit dem Anzug verbunden sein kann,
- die Blase (71) einen Eingang und einen Ausgang hat, die je ausserhalb des Anzuges münden und durch je ein Regelventil (72, 76) verschlossen sind,
- das erste Regelventil (72) den Druck von Atemgas aus einer Hochdruckversorgung (73) auf Mitteldruck reduziert,

- die Regelgrösse der an einer vorbestimmten Stelle des Anzuges in den Hohlräumen (5) herrschende hydrostatische Druck ist, der mittels einer Druckleitung (74) an das erste Regelventil (72) übertragen werden kann,
- eine Atemmaske (78) vorhanden ist und durch den Träger des Anzuges getragen wird
- der Ausgang des zweiten Regelventils (76), das den Mitteldruck auf Atemdruck reduzieren kann, in den Atemschlauch (77) mündet.

25. Anzug zum Schutz vor Beschleunigungskräften gemäss Patentanspruch 24, dadurch gekennzeichnet, dass an einer geeigneten Stelle zwischen dem zweiten Regelventil (76) und der Atemmaske (78) unter beider Einschluss eine Ueberströmeinrichtung vorhanden ist.

26. Anzug zum Schutz vor Beschleunigungskräften gemäss Patentanspruch 24, dadurch gekennzeichnet, dass eine Hörgarnitur (80) vorhanden ist und vom Träger des Anzuges getragen wird, die mittels Verbindungsschläuchen mit einer den Atemdruck führenden Stelle verbunden ist, so dass auf die Aussenseite der Trommelfelle der gleiche Druck wirkt, wie auf deren Innenseite.

27. Anzug zum Schutz vor Beschleunigungskräften gemäss Patentansprüchen 1 bis 12, dadurch gekennzeichnet, dass die Verbindungsstellen (6) durch Kleben erzeugt sind.

28. Anzug zum Schutz vor Beschleunigungskräften gemäss Patentansprüchen 1 bis 12, dadurch gekennzeichnet, dass die Verbindungsstellen (6) durch Schweissen erzeugt sind.

29. Anzug zum Schutz vor Beschleunigungskräften gemäss Patentansprüchen 1 bis 12, dadurch gekennzeichnet, dass die Verbindungsstellen (6) durch Nähen und Abdichten erzeugt sind.

30. Anzug zum Schutz vor Beschleunigungskräften gemäss Patentansprüchen 6, 7, 8, 10, 11, 12, dadurch gekennzeichnet, dass die Bänder verzweigt sind.

31. Anzug zum Schutz vor Beschleunigungskräften gemäss Patentansprüchen 5 oder 6, dadurch gekennzeichnet, dass an Knickstellen des aktiven Teils des Anzuges biegeweiche jedoch knickfeste Elemente in die Hohlräume (5) eingelegt sind.

**Claims**

1. A suit for protection against acceleration forces, such as arise in high performance aircraft when flying in curves, whereby at least parts of the suit are made double-walled, with an inner layer (3) and an outer layer (4) which are connected at connection positions (6) so that hollow spaces (5) arise between the connection positions (6), these said hollow spaces (5) being filled with a fluid which, at accelerations of # 1g in the momentary and local Z-axis, exerts a compensating external pressure on the body of the wearer corresponding to its internal pressure, whereby

- the outer layer (4) is made from a low stretch material,
- the hollow spaces (5) form a continuous hydrostatic pressure column from ankles up to the neck of the wearer of the protective suit,
- the inner layer (3) exerts a pressure on the body of the wearer corresponding to the height of the fluid column and the effective acceleration in the momentary and local Z-axis,
- a tensile force is built up in the outer layer (4) due to this said pressure,
- the active part of the suit, comprising the layers (3, 4), has means for matching the suit to the current bodily conditions of its wearer,
- this active part of the suit has means for closure, which are simultaneously suited for building up the necessary basic pressure of the suit for straight flight,

characterised in that

- this said active part of the suit consists at least of the two said layers (3, 4), at the said connection positions (6) at least partially connected thereby creating the said hollow spaces (5) between the connecting positions (6),
- also the inner layer (3) is made from a low stretch textile material which within the range of the connecting positions (6) and the hollow spaces (5) is fluid tight,
- the connecting positions (6) outside of the hollow spaces (5) can be connected by single layer connecting parts (37) made from low stretch textile material able to transmit the built up tension to the surface of the body of the suits wearer,
- the connecting positions (6) neighbouring the hollow spaces (5) are arranged in such structures, that the contraction of the distance of said neighbouring hollow spaces (6) effected by pressure of the fluid within the hollow spaces (5) can build up and transmit to neighbouring elements (4, 37) the aimed at tension regarding direction as well as magnitude.

2. A suit for protection against acceleration forces according to Claim 1, characterised in that it essentially covers the whole body with the exception of the neck, head, hands and feet.

3. A suit for protection against acceleration forces according to Claim 1 or Claim 2, characterised in that a lining (1) and an oversuit (2) are present, whereby the lining (1) is worn under, the oversuit outside the active part of the suit.

4. A suit for protection against acceleration forces according to Claim 3, characterised in that the lining (1) and the oversuit (2) are partly joined to the active part of the suit.

5. A suit for protection against acceleration forces in accordance with Claim 1 or Claim 2, characterised in that the hollow spaces (5) and the connection positions (6) dividing them extend completely over the whole suit and only the places where there are means of matching and closing the suit are excepted therefrom.

6. A suit for protection against acceleration forces in accordance with Claim 1 or Claim 2, characterised in that the hollow spaces (5) and the connection positions (6) dividing them are arranged in bands, which extend over the whole length of the suit.

7. A suit for protection against acceleration forces in accordance with Claim 5 or Claim 6, characterised in that the individual connection positions (6) lie essentially on lines parallel to each other, and the separation of the connection positions (6) lying on an individual line corresponds somewhat to their lateral separation, and this arrangement of connection positions (6) can be applied where tensional forces mainly perpendicular to the direction of the connection positions (6) are to be generated.

8. A suit for protection against acceleration forces according to Claims 5, or Claim 6, characterised in that

- the connection positions (6) are in straight lines, which run essentially parallel to each other, whose lengths correspond to their lateral separation,
- the individual connection positions (6) lie essentially on two groups of parallel lines, which are displaced from each other by about half the lateral separation of two adjacent connection positions (6), and the connection positions (6) lying on the displaced parallel lines lie somewhat symmetrically to the gaps of the connection positions (6) on the non-displaced parallel lines, and this arrangement of connection positions (6) can be applied where tensional forces mainly perpendicular to the direction of the connection positions, in a small measure also in their direction, are to be generated.

9. A suit for protection against acceleration forces according to Claim 5, or Claim 6, characterised in that the individual connection positions (6) are in straight lines which are arranged essentially radial to a point and this arrangement of connection positions (6) can be applied, both where tensional forces are to be built up on circulating lines and also a basket-shaped deformation of the mutually connected layers (3, 4) is to be effected.

10. A suit for protection against acceleration forces according to Claims 6 and 7 or 8, characterised in that the bands extending over the whole length of the suit are formed in a wave shape.

11. A suit for protection against acceleration forces according to Claim 6, characterised in that that the bands extending over the whole length of the suit are formed in a wave shape.

12. A suit for protection against acceleration forces according to Claim 6 and 7 or 8, characterised in that that the bands extending over the whole length of the suit are formed essentially in an elongated shape.

13. A suit for protection against acceleration forces according to Claim 1 or Claim 2, characterised in that the means for matching the suit to the current bodily conditions of the its wearer comprise straps and buckles, which are arranged over the whole length of the suit.

14. A suit for protection against acceleration forces according to Claim 1 or Claim 2, characterised in that the means for matching the suit to the current bodily conditions of the its wearer comprise velcro fasteners, which extend over the entire length of the part of the suit to be closed.

15. A suit for protection against acceleration forces in accordance with Claim 14, characterised in that the velcro fasteners (20, 21) comprise a multiplicity of straps.

16. A suit for protection against acceleration forces in accordance with Claim 1 or Claim 2, characterised in that the means for closing comprise zip fasteners.

17. A suit for protection against acceleration forces according to Claims 1 or 2 and 16. characterised in that the means of matching the suit to the current bodily conditions of its wearer comprise pneumatic tensioning elements (25), which extend over the whole length of the zip fasteners and are arranged parallel to them

   - the tensioning elements (25) are made from a low-stretch and airtight textile material and can have connection positions (6) along their length,
   - the tensioning elements (25) can build up the basic tension σ of the suit due to a fluid under pressure.

18. A suit for protection against acceleration forces according to Claims 13 to 15, characterised in that the suit has an insert (19) along the means of closure and the means of closure are arranged such that the insert (19) is bridged over in the closure so that the tension in the suit runs via the means of closure and the insert (19) is fully unloaded by it.

19. A suit for protection against acceleration forces according to Claims 14 to 16 and 18, characterised in that a first zip fastener (12) is present, which closes the insert (19) and the velcro fastener (20, 21) is so arranged that its fixed part (21) lies against the body, its movable part (20) is fixed to the end of the insert (19), thus the closed velcro fastener (20, 21) bridges the insert (19) and the zip fastener(12).

20. A suit for protection against acceleration forces according to Claim 14 to 16 and 18, characterised in that

   - a first zip fastener (12) is present, which closes the part of the suit to be closed,
   - a second zip fastener is present, bridging the insert (19),
   - a third zip fastener (62a, b) is present, of which one half (62a) is fastened to the part of the suit to be closed, and the other half (62b) is fastened to the end of the cloth (66), which extends over the whole length of the suit to be closed,
   - the cloth (66) itself has a second insert (19a) extending over its whole length of the part of the suit to be closed,
   - a fourth zip fastener (63a, b) is present, which bridges the second insert (19a) and with which the necessary basic tension can be provided in the suit,
   - the velcro fastener (20, 21) joins the cloth (66) to the part of the suit to be closed.

21. A suit for protection against acceleration forces according to Claims 14 to 18, characterised in that,

   - a first zip fastener (12) is present, which closes the part of the suit to be closed,
   - a second zip fastener (61a, b) is present bridging the insert (19),
   - a third zip fastener (62a, b) is present, whose one half (62a) is fastened to the part of the suit to be closed and whose other half (62b) is fastened to the end of a cloth (66), which extends over the whole length of the part of the suit to be closed,

- the pneumatic element (25) is inserted in the cloth (66),
- the velcro fastener (20, 21) joins the cloth (66) with the part of the suit to be closed.

22. A suit for protection against acceleration forces according to Claim 5 or Claim 6, characterised in that

- the layers (3, 4) containing a fluid in the hollow spaces (5) structured by the connection positions (6) and arising from them are formed in height as enclosed regions, of which each has valves (16, 17) for filling and ventilation,
- these regions are arranged to overlap in the suit, so that the hydrostatic pressure in the outer region can be transmitted to the outer part of the inner region.

23. A suit for protection against acceleration forces according to Claim 1 or 2 or 3 or 4, characterised in that it

- has a fluid filled insert (67a, b), which is arranged inside the suit in the belly/abdominal region and can be joined externally to the suit,
- the insert (67a, b) is connected to a reservoir (68a, b), extending upwards, which is arranged outside the suit and is joined to it, which reservoir (68a, b) is similarly filled with fluid, whereby, under an increase in the loading due to acceleration, fluid can flow back from the reservoir (68a, b) into the insert (67a, b) and increase the pressure on the belly/abdominal region.

24. A suit for protection against acceleration forces according to one of the Claims 1 to 22, characterised in that

- an anatomically shaped bladder (71) made from an elastomer is present, which is arranged inside the suit in the belly/abdominal region and can be joined externally to the suit,
- the bladder (71) has an entrance and an exit, each of which opens outside the suit and are each closed by a regulating valve (72, 76),
- the first regulating valve (72) reduces the pressure of breathing air from a high pressure supply (73) to a medium pressure,
- the control value, which is the ruling hydrostatic pressure at a predetermined position in the hollow space (5) of the suit, can be transmitted to the first regulating valve (72) by means of a pressure line (74),
- a breathing mask (78) is present and is worn by the wearer of the suit,
- the outlet of the second regulating valve (76), which can reduce the medium pressure to breathing pressure, opens into the breathing tube (77).

25. A suit for protection against acceleration forces according to Claim 24, characterised in that at a suitable position between the second regulating valve (76) and the breathing mask (78) and connected to both, an over flow device is present.

26. A suit for protection against acceleration forces according to Claim 24, characterised in that an earphone harness (80) is present and is worn by the wearer of the suit, which by means of connecting tubes is connected to a position carrying the breathing pressure, so that on the outer side of the eardrum the same pressure is effective, as on its inner side.

27. A suit for protection against acceleration forces according to Claims 1 to 12, characterised in that the connection positions (6) are formed by gluing.

28. A suit for protection against acceleration forces according to Claims 1 to 12, characterised in that the connection positions (6) are formed by welding.

29. A suit for protection against acceleration forces according to Claims 1 to 12, characterised in that the connection positions (6) are formed by sewing and sealing.

30. A suit for protection against acceleration forces according to Claims 6, 7, 8, 10, 11, 12, characterised in that the bands are branched.

31. A suit for protection against acceleration forces according to Claim 5 or Claim 6, characterised in that at creasing positions of the active part of the suit soft bending but kink-resisting elements are inserted in the hollow spaces (5).

## Revendications

1. Vêtement de protection contre les forces d'accélération telles qu'elles apparaissent dans les avions très performants dans des courbes, des parties au moins de ce vêtement ayant une double paroi, avec une couche intérieure (3) et une couche extérieure (4) qui sont reliées au niveau de points de liaison (6) et qui définissent des cavités (5) situées entre ces points de liaison (6) et remplies d'un liquide qui, lors de l'apparition d'accélérations ≠ 1g dans l'axe vertical instantané et local, produit une pression extérieure de compensation correspondant à la pression interne de la personne qui porte le vêtement, étant précisé

- que la couche extérieure (4) se compose d'une matière peu extensible,
- que les cavités (5) forment une colonne de pression hydrostatique continue des chevilles jusqu'au cou de la personne qui porte le vêtement,
- que la couche intérieure (3) exerce sur le corps de la personne une pression qui correspond à la hauteur de la colonne de liquide et à l'accélération agissante dans l'axe vertical instantané et local,
- qu'un effort de tension est produit dans la couche extérieure (4) sous l'action de cette pression,
- que le vêtement composé des couches (3, 4) comporte des moyens pour adapter le vêtement à la position du moment du corps de la personne qui le porte, et
- que le vêtement comporte des moyens de fermeture qui sont en même temps aptes à produire la tension de base du vêtement qui est nécessaire pour le vol en ligne droite,

caractérisé en ce que

- la partie active du vêtement se compose au moins partiellement des deux couches (3, 4) reliées au moins partiellement au niveau des points de liaison (6), de sorte que les cavités (5) sont formées entre les points de liaison (6),
- la couche intérieure (3) se compose elle aussi d'une matière textile peu extensible qui est étanche au liquide dans la zone des points de liaison (6) et des cavités (5),
- les points de liaison (6) peuvent être reliés, à l'extérieur des cavités (5) par des éléments de liaison monocouche (37) composés d'une matière textile peu extensible, qui peuvent transmettre l'effort de tension produit à la surface du corps de la personne qui porte le vêtement, et
- les points de liaison (6) qui délimitent les cavités (5) sont disposés en structures telles que la réduction de la distance entre des points de liaison (6) voisins qui est provoquée par la pression du liquide des cavités (5) peut produire l'effort de tension recherché, dans le bon sens et suivant la bonne valeur, et le transmettre aux éléments de vêtement (4, 37) voisins.

2. Vêtement de protection contre les forces d'accélération selon la revendication 1, caractérisé en ce qu'il couvre pratiquement tout le corps, sauf le cou, la tête, les mains et les pieds.

3. Vêtement de protection contre les forces d'accélération selon la revendication 1 ou 2, caractérisé en ce qu'il est prévu une doublure (1) et un revêtement (2), la doublure (1) étant portée sous la partie active du vêtement, et le revêtement (2) sur ladite partie active.

4. Vêtement de protection contre les forces d'accélération selon la revendication 3, caractérisé en ce que la doublure (1) et le revêtement (2) sont reliés partiellement à la partie active du vêtement.

5. Vêtement de protection contre les forces d'accélération selon la revendication 1 ou 2, caractérisé en ce que les cavités (5) et les points de liaison (6) qui les délimitent s'étendent sur tout le vêtement, à l'exception des endroits où se trouvent les moyens d'adaptation et de fermeture du vêtement.

6. Vêtement de protection contre les forces d'accélération selon la revendication 1 ou 2, caractérisé en ce que les cavités (5) et les points de liaison (6) qui les délimitent sont disposés en bandes qui s'étendent sur toute la longueur du vêtement.

7. Vêtement de protection contre les forces d'accélération selon la revendication 5 ou 6, caractérisé en ce que les différents points de liaison (6) se trouvent pratiquement sur des lignes parallèles et l'écartement des points de liaison (6) situés sur une ligne individuelle correspond à peu près à leur écartement latéral, et cette disposition des points de liaison (6) peut être mise en oeuvre là où les efforts de tension doivent se former essentiellement perpendiculairement au sens des points de liaison (6).

8. Vêtement de protection contre les forces d'accélération selon la revendication 5 ou 6, caractérisé en ce que

- les points de liaison (6) sont des segments droits qui sont pratiquement parallèles et dont la longueur correspond à peu près à leur écartement latéral,
- les différents points de liaison (6) se trouvent pratiquement sur deux séries de lignes parallèles qui sont décalées l'une par rapport à l'autre suivant la moitié de l'écartement latéral de deux points de liaison (6) voisins, et les points de liaison (6) situés sur les lignes parallèles décalées sont à peu près symétriques par rapport à l'absence de points de liaison (6) sur les lignes parallèles non décalées, et cette disposition des points de liaison (6) peut être mise en oeuvre là où les efforts de tension doivent se former essentiellement perpendiculairement au sens des points de liaison, et dans une moindre mesure, également, dans le sens desdits points de liaison.

9. Vêtement de protection contre les forces d'accélération selon la revendication 5 ou 6, caractérisé en ce que les différents points de liaison (6) sont des segments droits qui sont disposés pratiquement radialement autour d'un point, et cette disposition des points de liaison (6) peut être mise en oeuvre là où les efforts de tension doivent être formés sur des lignes circulaires et où une déformation en forme de corbeille des couches (3, 4) reliées doit être provoquée.

10. Vêtement de protection contre les forces d'accélération selon les revendications 6 et 7 ou 8, caractérisé en ce que les bandes qui s'étendent sur toute la longueur du vêtement ont une forme ondulée.

11. Vêtement de protection contre les forces d'accélération selon la revendication 6, caractérisé en ce que les bandes qui s'étendent sur toute la longueur du vêtement ont une forme ondulée.

12. Vêtement de protection contre les forces d'accélération selon les revendications 6 et 7 ou 8, caractérisé en ce que les bandes qui s'étendent sur toute la longueur du vêtement ont une forme pratiquement allongée.

13. Vêtement de protection contre les forces d'accélération selon la revendication 1 ou 2, caractérisé en ce que les moyens pour adapter le vêtement à la position du moment du corps de la personne qui le porte se composent de courroies et de boucles qui sont disposées sur toute la longueur du vêtement.

14. Vêtement de protection contre les forces d'accélération selon la revendication 1 ou 2, caractérisé en ce que les moyens pour adapter le vêtement à la position du moment du corps de la personne qui le porte se composent de fermetures auto-agrippantes qui s'étendent sur toute la longueur de la partie du vêtement à fermer.

15. Vêtement de protection contre les forces d'accélération selon la revendication 14, caractérisé en ce que les fermetures auto-agrippantes (20, 21) se composent d'une multiplicité de pattes.

16. Vêtement de protection contre les forces d'accélération selon la revendication 1 ou 2, caractérisé en ce que les moyens de fermeture se composent de fermetures à glissière.

17. Vêtement de protection contre les forces d'accélération selon les revendications 1 ou 2 et 16, caractérisé en ce que les moyens pour adapter le vêtement à la position du moment du corps de la personne qui le porte se composent d'éléments de tension pneumatiques (25) qui s'étendent sur toute la longueur des fermetures à glissière et qui sont parallèles à celles-ci,

- les éléments de tension (25) sont fabriqués à partir d'une matière textile peu extensible et étanche à l'air, et peuvent comporter dans leur sens longitudinal des points de liaison (6),

- les éléments de tension (25) peuvent produire la tension de base σ du vêtement en étant sollicités par un fluide sous pression.

18. Vêtement de protection contre les forces d'accélération selon les revendications 13 à 15, caractérisé en ce qu'il comporte un rabat (19) le long des moyens de fermeture, et ceux-ci sont disposés de telle sorte que le rabat (19) soit couvert, quand le vêtement est fermé, de sorte que l'effort de tension dans le vêtement passe par les moyens de fermeture et que le rabat (19) soit complètement déchargé de cet effort.

19. Vêtement de protection contre les forces d'accélération selon les revendications 14 à 16 et 18, caractérisé en ce qu'il est prévu une première fermeture à glissière (12) qui ferme le rabat (19), et la fermeture auto-agrippante (20, 21) est disposée de telle sorte que sa partie fixe (21) soit appliquée contre le corps, que la partie mobile (20) soit fixée à l'extrémité du rabat (19) et que la fermeture auto-agrippante (20, 21), une fois fermée, couvre donc le rabat (19) et la fermeture à glissière (12).

20. Vêtement de protection contre les forces d'accélération selon les revendications 14 à 16 et 18, caractérisé

- en ce qu'il est prévu une première fermeture à glissière (12) qui ferme la partie du vêtement à fermer,

- en ce qu'il est prévu une deuxième fermeture à glissière (61a, b) qui couvre le rabat (19),

- en ce qu'il est prévu une troisième fermeture à glissière (62a, b) dont une moitié (62a) est fixée à la partie du vêtement à fermer et dont l'autre moitié (62b) est fixée à l'extrémité d'une patte (66) qui s'étend sur toute la longueur de la partie du vêtement à fermer,

- en ce que la patte (66) présente elle-même un second rabat (19a) qui s'étend sur toute sa longueur,

- en ce qu'il est prévu une quatrième fermeture à glissière (63a, b) qui couvre le second rabat (19a) et grâce à laquelle la tension de base nécessaire peut être communiquée au vêtement,

- et en ce que la fermeture auto-agrippante (20, 21) relie la patte (66) à la partie du vêtement à fermer.

21. Vêtement de protection contre les forces d'accélération selon les revendications 14 à 18, caractérisé

- en ce qu'il est prévu une première fermeture à glissière (12) qui ferme la partie du vêtement à fermer,
- en ce qu'il est prévu une deuxième fermeture à glissière (61a, b) qui couvre le rabat (19),
- en ce qu'il est prévu une troisième fermeture à glissière (62a, b) dont une moitié (62a) est fixée à la partie du vêtement à fermer et dont l'autre moitié (62b) est fixée à l'extrémité d'une patte (66) qui s'étend sur toute la longueur de la partie du vêtement à fermer,
- en ce que l'élément de tension pneumatique (26) est intégré dans la patte (66),
- et en ce que la fermeture auto-agrippante (20, 21) relie la patte (66) à la partie du vêtement à fermer.

22. Vêtement de protection contre les forces d'accélération selon la revendication 5 ou 6, caractérisé

- en ce que les couches (3, 4) structurées par les points de liaison (6) et contenant un liquide dans les cavités (5) ainsi formées, sont conçues comme des zones fermées en hauteur qui disposent chacune de valves (16, 17) pour le remplissage et l'aération,
- et en ce que ces zones sont disposées sur le vêtement en se chevauchant, de sorte que la pression hydrostatique qui règne en bas de la zone supérieure peut être transmise à la partie supérieure de la zone inférieure.

23. Vêtement de protection contre les forces d'accélération selon les revendications 1 ou 2 ou 3 ou 4, caractérisé

- en ce qu'il comporte une pièce rapportée remplie de liquide (67a, b) qui est disposée à l'intérieur du vêtement dans la région abdominale et qui peut être reliée au vêtement à l'extérieur,
- et en ce que la pièce rapportée (67a, b) est reliée à un réservoir (68a, b) qui s'étend vers le haut et qui est disposé à l'extérieur du vêtement et est relié à celui-ci, le réservoir (68a, b) étant lui aussi rempli de liquide, étant précisé que lors d'un accroissement de la contrainte d'accélération, du liquide peut s'écouler à partir du réservoir (68a, b) dans la pièce rapportée (67a, b) et augmenter la pression externe exercée sur la région abdominale.

24. Vêtement de protection contre des forces d'accélération selon l'une des revendications 1 à 22, caractérisé

- en ce qu'il est prévu une poche (71) réalisée à partir d'un élastomère et de forme anatomique, qui est disposée à l'intérieur du vêtement dans la région abdominale et qui peut être reliée au vêtement à l'extérieur,
- en ce que la poche (71) a une entrée et une sortie qui débouchent toutes les deux à l'extérieur du vêtement et qui sont fermées par des soupapes de réglage (respectivement 72 et 76),
- en ce que la première soupape de réglage (72) réduit à une moyenne pression la pression du gaz respiratoire qui provient d'une alimentation en haute pression (73),
- en ce que la grandeur de réglage est constituée par la pression hydrostatique qui règne à un endroit prédéfini du vêtement, dans les cavités (5), et qui peut être transmise à l'aide d'une conduite de pression (74) à la première soupape de réglage (72),
- en ce qu'il est prévu un masque respiratoire (78), qui est porté par la personne portant le vêtement,
- et en ce que la sortie de la seconde soupape de réglage (76) qui peut réduire la moyenne pression à la pression respiratoire débouche dans le tuyau respiratoire (77).

25. Vêtement de protection contre les forces d'accélération selon la revendication 24, caractérisé en ce qu'il est prévu un dispositif de trop-plein à un endroit approprié entre la seconde soupape de réglage (76) et le masque (78) inclus.

26. Vêtement de protection contre les forces d'accélération selon la revendication 24, caractérisé en ce qu'il est prévu un appareil d'écoute (80), porté par la personne qui porte le vêtement, qui est relié à l'aide de tuyaux de liaison à un point amenant la pression respiratoire, de sorte que la même pression agit sur le côté extérieur et sur le côté intérieur des tympans.

27. Vêtement de protection contre les forces d'accélération selon les revendications 1 à 12, caractérisé en ce que les points de liaison (6) sont réalisés par collage.

28. Vêtement de protection contre les forces d'accélération selon les revendications 1 à 12, caractérisé en ce que les points de liaison (6) sont réalisés par soudage.

29. Vêtement de protection contre les forces d'accélération selon les revendications 1 à 12, caractérisé en ce que les points de liaison (6) sont réalisés par piqûre et étanchéification.

30. Vêtement de protection contre les forces d'accélération selon les revendications 6, 7, 8, 10, 11, 12, caractérisé en ce que les bandes présent des embranchements.

**31.** Vêtement de protection contre les forces d'accélération selon les revendications 5 ou 6, caractérisé en ce que des éléments souples mais résistants au pliage sont insérés dans les cavités (5) au niveau des points de pliage de la partie active du vêtement.

**Fig. 1**

**Fig. 2**

Fig. 3

a)

b)

Fig. 4

Fig. 9

Fig. 10

Fig. 5

Fig. 6

**Fig. 8**

**Fig. 7**

**Fig. 11**

a)

b)

**Fig. 13**

EP 0 983 190 B1

**Fig. 12**

**Fig. 16**

links

rechts

rechts

links

Fig. 14

Fig. 15

**Fig. 17**

**Fig. 18**

EP 0 983 190 B1

Fig. 19

Fig. 20

EP 0 983 190 B1